# EUROPÄISCHE PATENTSCHRIFT

(11) **EP 2 965 533 B1**
(45) Veröffentlichungstag und Bekanntmachung des Hinweises auf die Patenterteilung: **10.05.2017**
(21) Anmeldenummer: 15715170.5
(22) Anmeldetag: 10.02.2015
(51) Int. Cl.: H04Q 9/00, H04L 29/08, G06Q 50/26, G06Q 10/10

(54) **VERFAHREN ZUR INFORMATIONSÜBERTRAGUNG ZWISCHEN EINER KOORDINATIONSSTELLE UND EINEM TEILNEHMER, RECHNERMODUL UND ENSEMBLE MEHRERER SOLCHER RECHNERMODULE**
METHOD FOR TRANSMISSION OF INFORMATION BETWEEN A COORDINATION OFFICE AND A PARTICIPANT, COMPUTER MODULE, AND ENSEMBLE OF A PLURALITY OF SAID COMPUTER MODULES
PROCÉDÉ POUR LA TRANSMISSION D'INFORMATION ENTRE UN SERVICE DE COORDINATION ET UN ABONNÉ, MODULE ORDINATEUR ET ENSEMBLE DE PLUSIEURS MODULES ORDINATEURS

(30) Priorität: 10.03.2014 DE 102014204370
(43) Veröffentlichungstag der Anmeldung: 13.01.2016
(73) Patentinhaber: Thales Deutschland GmbH, 70435 Stuttgart (DE)
(72) Erfinder: KLOTZ, Rainer, 74626 Bretzfeld (DE)
(74) Vertreter: DREISS Patentanwälte PartG mbB
(86) Internationale Anmeldenummer: PCT/EP2015/052677
(87) Internationale Veröffentlichungsnummer: WO 2015/135707

(56) Entgegenhaltungen:
- EP-A1- 2 437 515
- YONG BAI ET AL: "Emergency communication system by heterogeneous wireless networking", WIRELESS COMMUNICATIONS, NETWORKING AND INFORMATION SECURITY (WCNIS), 2010 IEEE INTERNATIONAL CONFERENCE ON, IEEE, PISCATAWAY, NJ, USA, 25. Juni 2010 (2010-06-25), Seiten 488-492, XP031727220, ISBN: 978-1-4244-5850-9

## Beschreibung

Die vorliegende Erfindung betrifft ein Verfahren zur Realisierung einer Informationsübertragung von einer Koordinationsstelle, die einen Einsatz von Sicherheits- oder Hilfskräften in einem Einsatzgebiet koordiniert, zu einem in dem Einsatzgebiet befindlichen Teilnehmer als Teil der Sicherheits- oder Hilfskräfte, wobei die zu übertragenden Informationen zumindest Informationen bezüglich Geographie und/oder Infrastruktur in dem Einsatzgebiet umfassen. Außerdem betrifft die Erfindung ein Rechnermodul umfassend einen Mikroprozessor, ein Speicherelement, ein auf dem Mikroprozessor ablaufendes Betriebssystem, und eine Kommunikationsschnittstelle zur Kommunikation mit Teilnehmern. Schließlich betrifft die vorliegende Erfindung auch ein Ensemble mehrerer Rechnermodule, jeweils umfassend einen Mikroprozessor, ein Speicherelement, ein auf dem Mikroprozessor ablaufendes Betriebssystem, und eine Kommunikationsschnittstelle zur Kommunikation mit Teilnehmern.

Aus dem Stand der Technik ist es bekannt, Hilfs- oder Sicherheitskräfte in einem für sie unbekannten Einsatzgebiet einzusetzen wie z.B. in der Veröffentlichung "Emergency Communication System by Heterogeneous Wireless Networking" von Yong Bai ET AL beschrieben, XP031727220. "Hilfskräfte" ist ein Sammelbegriff für Katastrophenhelfer eines Staates oder einer Organisation (z.B. Rettungsdienst, technisches Hilfswerk, zivile Helfer), die bspw. nach einer Umweltkatastrophe (z.B. einem Erdbeben, einem Unwetter, einem Vulkanausbruch, einem Tsunami, etc.) oder nach einer sonstigen Katastrophe (z.B. einem Bomben- oder sonstigen Attentat, einem Bombenangriff, einem Zugunglück, einer Massenkarambolage mit Kraftfahrzeugen, einem Großbrand, etc.) für Hilfe sorgen. Die Katastrophenhelfer können dabei erste Hilfe leisten, Verschüttete bergen, Brände bekämpfen, zerstörte Infrastruktur (z.B. Straßen, Wasser- und Energieversorgung, Abwasserleitungen, Flughäfen, Häfen, Krankenhäuser, etc.) wieder instand setzen. "Sicherheitskräfte" ist ein Sammelbegriff für Exekutivorgane eines Staates oder einer Organisation, die der Durchsetzung des Gewaltmonopols des Staates oder der Organisation und der Bewahrung oder Wiederherstellung der inneren Sicherheit dienen. Dazu gehören unter anderem Polizei, paramilitärische Einheiten, Geheimpolizei, Inlandsgeheimdienste und auch das Militär. Sicherheitskräfte ergreifen bspw. in einer sicherheitskritischen Situation (z.B. einer Großdemonstration, einem Angriff auf die innere Sicherheit eines Landes, einem Kriegseinsatz, etc.) geeignete Gegenmaßnahmen.

Um den Sicherheits- oder Hilfskräften den Einsatz in dem weitgehend unbekannten Einsatzgebiet zu erleichtern, ist es aus dem Stand der Technik bekannt, die Sicherheits- oder Hilfskräfte vor dem Einsatz mit Informationen über das Einsatzgebiet, insbesondere mit Informationen bezüglich Geographie und/oder Infrastruktur in dem Einsatzgebiet, zu versorgen. Dies kann schriftlich, bspw. auf Papier, oder elektronisch, bspw. auf einem Laptop oder Tablet-PC, erfolgen. Updates der Informationen, bspw. die Zerstörung von Straßen, Brücken oder Bahngleisen, die aktuelle Position von hilfsbedürftigen Personen oder von gegnerischen Streitkräften, wird im Stand der Technik in der Regel über eine Funkverbindung zwischen einer Koordinationsstelle, die den Einsatz in dem Einsatzgebiet koordiniert, und einem Teilnehmer als Teil der Hilfs- oder Streitkräfte realisiert. Dies ist aber aus verschiedenen Gründen problematisch:

Die im sicherheitskritischen und militärischen Bereich eingesetzten Funkverbindungen haben in der Regel eine relativ geringe Bandbreite, die für eine Informationsübertragung zur Verfügung steht. Ein Grund hierfür sind sicherheitsrelevante Aspekte, die eine Verschlüsselung der übertragenen Daten und/oder eine Authentifizierung des Teilnehmers vor der Informationsübertragung erforderlich macht. Beides beansprucht einen Teil der verfügbaren Gesamt-Bandbreite.

Außerdem sollte die verfügbare Bandbreite der Funkverbindung zwischen der Koordinationsstelle und dem Teilnehmer nach Möglichkeit für einen Sprechfunk frei gehalten werden. Die Übertragung großer Informationsmengen würde die Funkverfügbarkeit für den Sprechfunk über einen längeren Zeitraum hinweg blockieren bzw. deutlich einschränken, was unerwünscht ist, da der Teilnehmer und andere im Einsatzgebiet befindliche Teilnehmer über Sprechfunk nicht kurzfristig erreicht werden können.

Ebenfalls problematisch ist, dass das Personal einer Koordinationsstelle (z.B. eines Gefechtsstands), die den Einsatz in dem Einsatzgebiet koordiniert, durch die regelmäßige Übertragung von Informationen oder aktualisierten Informationen an die im Einsatzgebiet befindlichen Teilnehmer (z.B. Soldaten) stark belastet wird. Ein Ziel sollte es deshalb sein, das Personal der Koordinationsstelle zu entlasten, ohne den Informationsfluss zwischen der Koordinationsstelle und den Teilnehmern im Einsatzgebiet zu beeinträchtigen oder gar ganz zu unterbrechen.

Weiterhin problematisch ist, dass es trotz aller Sicherheitsvorkehrungen bei der Informationsübermittlung nicht ausgeschlossen werden kann, dass die übermittelten Informationen von unbefugten Personen abgehört oder sogar abgefangen und manipuliert werden können (sog. unlawful interception). Dies kann den Erfolg eines Hilfs- oder Sicherheitseinsatzes in Gefahr bringen. Das Problem der unlawful interception ergibt sich insbesondere aufgrund der großen Entfernungen, über die die Informationen zwischen der Koordinationsstelle und den Teilnehmern in dem Einsatzgebiet übertragen werden müssen, und den damit verbundenen hohen Sendeleistungen. Für unbefugte Personen ist es möglich, sich an einer beliebigen Stelle auf dem Übertragungsweg bzw. in Reichweite der übermittelten Informationen zu postieren und die übertragenen Informationen abzuhören oder abzufangen und zu manipulieren.

Außerdem setzt die Informationsübertragung über große Entfernungen, wie sie derzeit im Stand der Technik praktiziert wird, umfangreiche Hardware bei den Teilnehmern voraus, um die Informationen empfangen, verarbeiten und selbst Informationen senden zu können. Dies ist insbesondere bei Soldaten ein Problem, da ihre Beweglichkeit in zunehmendem Maße durch schwere Zusatzausrüstung erschwert wird. Aber eine gute Beweglichkeit ist bei Soldaten ein wichtiges Merkmal, sowohl hinsichtlich langer Fußmärsche als auch hinsichtlich einer raschen Reaktion auf sich ändernde Situationen.

Schließlich ist es derzeit nicht möglich, den Informationsfluss zwischen der Koordinationsstelle und den im Einsatzgebiet befindlichen Teilnehmern zu protokollieren, insbesondere bezüglich des Inhalts der übermittelten Informationen. Dies kann jedoch zu Trainingszwecken oder aus anderen Gründen wünschenswert sein.

Ausgehend von dem beschriebenen Stand der Technik liegt der vorliegenden Erfindung die Aufgabe zu Grunde, eine alternative Möglichkeit zur Informationsübertragung zwischen einer Koordinationsstelle und Teilnehmer in einem Einsatzgebiet vorzuschlagen, welche die genannten Nachteile vermeidet.

Zur Lösung dieser Aufgabe wird ausgehend von dem Verfahren der eingangs genannten Art vorgeschlagen, dass
- ein Ensemble mehrerer Rechnermodule vorgesehen wird, die jeweils einen Mikroprozessor, ein Speicherelement, und eine Kommunikationsschnittstelle zur Kommunikation mit in dem Einsatzgebiet befindlichen Teilnehmern aufweisen,
- in den Speicherelementen der Rechnermodule die zur Übertragung an den Teilnehmer bestimmten Informationen abgespeichert werden,
- nach dem Abspeichern der Informationen in den Speicherelementen der Rechnermodule diese in dem Einsatzgebiet zufällig und räumlich verteilt angeordnet werden,
- von den in dem Einsatzgebiet angeordneten Rechnermodulen Signale ausgesandt werden, die eine Ortung der Rechnermodule durch den Teilnehmer erlauben,
- zumindest von einem durch den Teilnehmer georteten Rechnermodul eine Authentifizierung des in der Nähe des georteten Rechnermoduls befindlichen Teilnehmers durchgeführt wird,
- zumindest von dem georteten Rechnermodul über die Kommunikationsschnittstelle nach erfolgreicher Authentifizierung des Teilnehmers zumindest ein Teil der in dem Speicherelement des georteten Rechnermoduls abgespeicherten Informationen an den in der Nähe des georteten Rechnermoduls befindlichen authentifizierten Teilnehmer übertragen werden, und
- die Rechnermodule des Ensembles nach Ablauf einer auf eine voraussichtliche Dauer des Einsatzes der Sicherheits- oder Hilfskräfte in dem Einsatzgebiet beschränkten Lebensdauer inaktiv werden und keine Signale mehr aussenden, die eine Ortung der Rechnermodule in dem Einsatzgebiet erlauben würden, keine Authentifizierung und/oder keine Informationsübertragung an in der Nähe befindliche authentifizierte Teilnehmer mehr durchführen.

Erfindungsgemäß wird ein völlig neuartiges Konzept zur Informationsübertragung zwischen einer Koordinationsstelle und Teilnehmern als Teil in einem Einsatzgebiet eines Hilfs- oder Sicherheitseinsatzes vorgeschlagen. Bei einem militärischen Einsatz ist die Koordinationsstelle bspw. ein Gefechtsstand und sind die Teilnehmer im Einsatzgebiet bspw. Soldaten. Statt die Informationen über eine Funkverbindung über große Reichweiten zu übertragen, werden die Informationen auf Speicherelementen einer Vielzahl von Rechnermodulen abgespeichert und die Rechnermodule im Einsatzgebiet verteilt. Die im Einsatzgebiet tätigen Teilnehmer können die Rechnermodule anpeilen bzw. orten und sich dem am nächsten befindlichen Rechnermodul nähern. Dann können die Teilnehmer aus nächster Nähe die abgespeicherten Informationen abfragen und ggf. selbst Informationen an das Rechnermodul übertragen, wo sie dann in dem Speicherelement abgespeichert werden. Auf diese Weise kann der Teilnehmer für nachfolgende Teilnehmer, die ebenfalls Informationen abfragen, die abgespeicherten Informationen aktualisieren und/oder ergänzen.

Ein besonderer Vorteil der Erfindung besteht darin, dass die Informationsübertragung von einem Rechnermodul zu einem in der Nähe befindlichen Teilnehmer über eine sehr kurze Distanz erfolgt. Dadurch wird ein unbefugter und für den empfangenden Teilnehmer unbemerkter Zugriff auf die übertragenen Informationen während der Informationsübertragung erheblich erschwert, wenn nicht sogar unmöglich gemacht. Die Reichweite der Informationsübertragung beträgt höchstens einige Meter, vorzugsweise nur einige Zentimeter. Die Datenübertragung erfolgt vorzugsweise kabellos, insbesondere optisch, induktiv, kapazitiv, akustisch oder über eine Funkverbindung. Aber auch jede andere Art von Datenübertragung ist denkbar.

Um einen unberechtigten Zugriff auf die in den Speicherelementen gespeicherten Informationen zu erschweren, haben die Rechnermodule zudem nur eine beschränkte Lebensdauer. Diese kann entweder durch einen programmierten Zeitmechanismus realisiert werden, der dafür sorgt, dass die abgespeicherten Informationen nach Ablauf einer vorgegebenen Zeitdauer gelöscht werden, oder aber sie ist inhärent durch eine beschränkte Kapazität einer unabhängigen Stromversorgung, insbesondere einer Batterie oder eines Akkumulators, des Rechnermoduls vorgegeben.

Für die Informationsübertragung über derart kurze Entfernungen sind lediglich kleine, leichte Sende-/ Empfangseinrichtungen bei den Teilnehmern erforderlich. Es wäre sogar denkbar, dass die entsprechenden Sende-/ Empfangseinrichtungen bereits in bei den Teilnehmern sowieso vorhandene Endgeräte (z.B. ein Smartphone oder ein Funkgerät für Sprachfunk) integriert sind. Ferner wäre es denkbar, die Sende-/ Empfangseinrichtungen so kleinbauend auszugestalten, dass sie in die Kleidung (z.B. Handschuhe oder Ärmel eines Schutz- oder Kampfanzugs) integriert werden können.

Die Rechnermodule sind von ihrem Aufbau und ihren Kosten her auf ein Minimum reduziert, so dass es ohne weiteres möglich ist, eine Vielzahl von Rechnermodulen über dem Einsatzgebiet so dicht zu verteilen, dass die Teilnehmer von einer beliebigen Position in dem Einsatzgebiet innerhalb kurzer Zeit eines der Rechnermodule erreichen können. Bei den üblicherweise für einen Hilfs- oder Sicherheitseinsatz anfallenden Kosten, fallen die zusätzlichen Kosten für die Rechnermodule kaum ins Gewicht. Insbesondere sind die Rechnermodule so klein ausgebildet und äußerlich so ausgestaltet, dass sie sich unauffällig in die Umgebung in dem Einsatzgebiet einfügen und für unberechtigte Personen nur sehr schwer zu lokalisieren sind. Die äußere Ausgestaltung der Rechnermodule kann sich auf die äußere Form und/oder auf die äußere Oberflächengestaltung (z.B. eine Farbe, ein Muster, eine Oberflächenstruktur) beziehen.

Gemäß einer vorteilhaften Weiterbildung der Erfindung wird vorgeschlagen, dass die Rechnermodule zur zufälligen und räumlich verteilten Anordnung in dem Einsatzgebiet aus einem über das Einsatzgebiet fliegenden Luftfahrzeug (z.B. Flugzeug, Hubschrauber, Drohne, etc.) oder aus einem durch das Einsatzgebiet fahrenden Landfahrzeug (z.B. Kraftfahrzeug, Panzer, UGV (unmanned ground vehicle), ROV (remotely operated vehicle) etc.) verstreut werden. Insbesondere ist es denkbar, dass hunderte, tausende oder gar zehntausende von Rechnermodulen über dem Einsatzgebiet verstreut werden. In den Speicherelementen der verstreuten Rechnermodule wurden zuvor die an den mindestens einen Teilnehmer in dem Einsatzgebiet zu übermittelnden Informationen abgespeichert. Ferner ist es denkbar, dass die Rechnermodule vor der verstreuten Anordnung in dem Einsatzgebiet aktiviert oder eingeschaltet werden. Die verstreut angeordneten Rechnermodule können dann von Teilnehmern in dem Einsatzgebiet angepeilt und/oder geortet werden. Sobald der Teilnehmer eines der Rechnermodule geortet hat, kann er sich diesem nähern. Dann wird eine Authentifizierung des in der Nähe zu dem Rechnermodul befindlichen Teilnehmers vorgenommen. Falls die Authentifizierung erfolgreich war, kann der Teilnehmer aus nächster Nähe die gespeicherten Informationen herunterladen. Damit verfügt der Teilnehmer über aktuelle Informationen bezüglich Geographie und Infrastruktur von zumindest einem Teil des Einsatzgebiets.

Gemäß einer bevorzugten Ausführungsform der Erfindung wird vorgeschlagen, dass die von den Rechnermodulen ausgesandten Signale Informationen bezüglich ihrer Position in dem Einsatzgebiet beinhalten, um eine Ortung der Rechnermodule in dem Einsatzgebiet durch die in dem Einsatzgebiet befindlichen Teilnehmer zu ermöglichen. Gemäß dieser Ausführungsform enthalten die von den Rechnermodulen zur Ortung durch die in dem Einsatzgebiet befindlichen Teilnehmer ausgesandten Ortungssignale Informationen bezüglich der aktuellen Position der Rechnermodule. In Reichweite der ausgesandten Ortungssignale befindliche Teilnehmer empfangen die Signale und extrahieren die Position von mindestens einem in der Nähe befindlichen Rechnermodul. Mit Hilfe einer Karte oder eines Satellitennavigationssystems kann ein Weg zu dem Rechnermodul ermittelt werden. Wenn die Positionssignale von mehreren Rechnermodulen empfangen werden, kann der Weg zu dem am nächsten befindlichen Rechnermodul ermittelt werden. Auf diese Weise kann ein Teilnehmer die Position des am nächsten befindlichen Rechnermoduls besonders einfach und schnell ermitteln und dieses Rechnermodul besonders schnell erreichen. werden. Die Ortungssignale können zu vorgegebenen Zeitpunkten, bspw. in regelmäßigen zeitlichen Abständen, ausgesandt werden. Alternativ wäre es denkbar, dass die Ortungssignale erst auf Veranlassung von in Reichweite befindlichen Teilnehmern ausgesandt werden. Dabei fordert ein Teilnehmer in dem Einsatzgebiet, der auf der Suche nach einem Rechnermodul ist, durch Aussenden eines Anforderungssignals von allen in Reichweite befindlichen Rechnermodulen die Übermittlung von Ortungssignalen an. Das Aussenden des Anforderungssignals und die Übermittlung des Ortungssignals erfolgt vorzugsweise über eine Funkverbindung.

Vorteilhafterweise werden unmittelbar vor der zufälligen und räumlich verteilten Anordnung der Rechnermodule des Ensembles in dem Einsatzgebiet die Positionsinformationen in den Speicherelementen der einzelnen Rechnermodule abgespeichert. Somit können die im Einsatzgebiet angeordneten Rechnermodule Positionsinformationen aussenden, selbst wenn sie nicht über ein Satellitennavigationssystem verfügen, das nach der Anordnung eines Rechnermoduls in dem Einsatzgebiet die aktuelle Position des Rechnermoduls liefert. Es wäre bspw. denkbar, dass das für die verteilte Anordnung der Rechnermodule zuständige Luft- oder Landfahrzeug ein Satellitennavigationssystem aufweist, das kontinuierlich die aktuelle Position des Fahrzeugs ermittelt. Unmittelbar vor der Anordnung eines Rechnermoduls in dem Einsatzgebiet wird in dessen Speicherelement die aktuelle Position des Fahrzeugs abgespeichert. Dies erfolgt vorzugsweise berührungslos, bspw. über eine Funkverbindung zwischen einem Sendemodul des Fahrzeugs und einem Empfangsmodul des Rechnermoduls. Das Empfangsmodul kann Bestandteil der Kommunikationsschnittstelle des Rechnermoduls sein. Die abgespeicherte Position des Fahrzeugs zum Zeitpunkt des Aussetzens des Rechnermoduls entspricht grob der Position, die das Rechnermodul dann in dem Einsatzgebiet einnimmt. Diese grobe Positionsinformation ist jedoch ausreichend, um den Teilnehmern eine einfache und zuverlässige Ortung und ein Auffinden des Rechnermoduls zu ermöglichen.

Alternativ wird vorgeschlagen, dass die Rechnermodule jeweils ein Satellitennavigationssystem aufweisen, das die Positionsinformationen eines Rechnermoduls nach der Anordnung in dem Einsatzgebiet automatisch ermittelt. Das Satellitennavigationssystem kann bspw. ein GPS-, ein Galileo-, ein GLONASS-, ein Compass- oder ein beliebig anderes System sein, das eine Positionsbestimmung mittels Satelliten ermöglicht. Mit Hilfe eines Satellitennavigationssystems kann die Position eines Rechnermoduls mit hoher Ortungsgenauigkeit ermittelt werden. Informationen bezüglich der ermittelten Position eines Rechnermoduls können dann als Inhalt eines von dem Rechnermodul ausgesandten Ortungssignals ausgesandt und von den in Reichweite des Signals befindlichen Teilnehmern empfangen werden.

Statt der Übermittlung von Positionsinformationen in den Ortungssignalen der Rechnermodule ist es auch denkbar, dass die von den Rechnermodulen ausgesandten Signale in regelmäßigen zeitlichen Abständen ausgesandte Beacon-Signale sind, die eine Peilung und/oder Ortung der Rechnermodule in dem Einsatzgebiet erlauben. Die Beacon-Signale enthalten vorzugsweise keine Positionsinformationen über das Rechnermodul, welches das Signal aussendet. Vielmehr können die Beacon-Signale von mehreren in dem Einsatzgebiet zueinander beabstandeten in Reichweite des Signals angeordneten Teilnehmern empfangen werden. Anhand der von den Teilnehmern empfangenen Signalen kann dann die Position des aussendenden Rechnermoduls ermittelt werden. Zu diesem Zweck ist es vorteilhaft, wenn die ausgesandten Beacon-Signale eine Kennung des sendenden Rechnermoduls sowie eine Information bezüglich des Aussendezeitpunkts der Signale enthalten. Diese Informationen können von den empfangenden Teilnehmern zur Ortung des Rechnermoduls ausgewertet werden. Anhand der Kennung des aussendenden Rechnermoduls kann zwischen Beacon-Signalen von verschiedenen Rechnermodulen unterschieden werden.

Gemäß einer anderen vorteilhaften Weiterbildung der Erfindung wird vorgeschlagen, dass der Informationsaustausch zwischen einem Rechnermodul und dem in der Nähe angeordneten authentifizierten Teilnehmer bidirektional ausgebildet ist, so dass der Teilnehmer nicht nur in dem Speicherelement des Rechnermoduls abgespeicherte Informationen herunterladen, sondern auch selbst Informationen in das Speicherelement hochladen kann, und dass Informationen, die das Rechnermodul von dem Teilnehmer empfangen hat, in dem Speicherelement des Rechnermoduls abgespeichert werden. Auf diese Weise ist es möglich, dass die vor Ort in dem Einsatzgebiet befindlichen Teilnehmer die in dem Rechenmodul abgespeicherten Informationen aktualisieren können. Falls der Teilnehmer bspw. Informationen über eine zerstörte Brücke oder eine verschüttete Straße hat, kann er diese Informationen in dem Rechnermodul abspeichern, so dass nachfolgend von dem Rechnermodul Informationen abrufende Teilnehmer die aktualisierten Informationen erhalten.

In diesem Zusammenhang ist es besonders vorteilhaft, wenn die Rechnermodule auch untereinander, vorzugsweise über eine Funkverbindung, Informationen austauschen. Auf diese Weise ist es möglich, dass die in einem Rechnermodul abgespeicherten aktualisierten Informationen auch an die anderen in dem Einsatzgebiet angeordneten Rechnermodule übertragen werden, so dass nach einer gewissen Zeit auf allen Rechnermodulen die aktualisierten Informationen abgespeichert sind und von Teilnehmern heruntergeladen werden können. Auf diese Weise kann ein Rechnernetzwerk nach Art eines dezentralen Intranets aufgebaut werden. Selbstverständlich wäre es denkbar, dass die Rechnermodule nicht nur aktualisierte Informationen, sondern auch andere Informationen untereinander austauschen. Da die Anordnung der Rechnermodule in dem Einsatzgebiet weitgehend zufällig erfolgt, könnte es bspw. vorteilhaft sein, wenn die Rechnermodule untereinander Positionsinformationen austauschen, so dass jedes Rechnermodul zumindest Informationen über die Position von benachbarten Rechnermodule hat. In einer weiteren Ausbaustufe wäre es sogar denkbar, dass alle Rechnermodule des Ensembles Positionsinformationen von allen Rechnermodulen des Ensembles haben, so dass jedes Rechnermodul die Topologie des Rechnernetzwerks abbilden kann. Das hat den Vorteil, dass ein Teilnehmer nach der Ortung eines ersten Rechnermoduls und dem Herunterladen von Informationen von diesem Rechnermodul auch Informationen über die Position von anderen Rechnermodulen in dem Einsatzgebiet erhält. Der Teilnehmer kann dann diese anderen Rechnermodule aufsuchen, bspw. um aktualisierte Informationen herunterzuladen oder um selbst Informationen auf dem Rechnermodul abzuspeichern, ohne dass er sie zuvor orten muss. Wenn der Teilnehmer zum Zeitpunkt des Herunterladens der Informationen von dem ersten Rechnermodul bereits eine Marschroute geplant hat, kann er anhand der Positionsinformationen für die übrigen Rechnermodule feststellen, welche anderen Rechnermodule entlang seiner Marschroute angeordnet sind. Der Teilnehmer kann dann auf seinem Marsch die anderen Rechnermodule zum Informationsaustausch gezielt ansteuern.

Gemäß einer weiteren vorteilhaften Ausgestaltung der Erfindung wird vorgeschlagen, dass jedes der Rechnermodule Informationen bezüglich seiner Position in dem Einsatzgebiet aussendet, die von zu dem jeweiligen Rechnermodul benachbarten, in Reichweite der ausgesandten Positionsinformationen befindlichen Rechnermodulen empfangen werden, so dass die Rechnermodule jeweils Informationen über die Position der benachbarten Rechnermodule haben. Vorteilhafterweise sind in den Speicherelementen der Rechnermodule Informationen bezüglich einer Position der Koordinationsstelle abgespeichert und Informationen bezüglich der eigenen Position vorhanden. Dadurch kann jedes der Rechnermodule in Abhängigkeit von diesen Positionsinformationen diejenigen benachbarten Rechnermodule auswählen und Informationen mit diesen austauschen, die auf dem kürzesten Weg von dem jeweiligen Rechnermodul zu der Koordinationsstelle liegen. Dadurch lässt sich ein Rechnernetzwerk in Form eines gerichteten, dezentralen Intranets realisieren.

Ferner wird vorgeschlagen, dass falls die Koordinationsstelle von einem der Rechnermodule Positionsinformationen empfängt, die Koordinationsstelle ihrerseits Informationen bezüglich derjenigen Rechnermodule aussendet, über welche die Koordinationsstelle mittels einer Funkverbindung erreicht werden kann. Vorzugsweise empfangen diejenigen Rechnermodule, über welche die Koordinationsstelle erreicht werden kann, die von der Koordinationsstelle ausgesandten Informationen und senden diese ihrerseits aus, so dass sie von zu dem jeweiligen Rechnermodul benachbarten, in Reichweite der ausgesandten Informationen befindlichen Rechnermodulen empfangen werden. Diese verfügen nun ihrerseits über Informationen, über welche Rechnermodule die Koordinationsstelle erreicht werden kann. Gemäß einer besonders bevorzugten Ausführungsform wird das Empfangen und Aussenden von Informationen, über welche Rechnermodule die Koordinationsstelle erreicht werden kann, so lange wiederholt, bis alle Rechnermodule des Ensembles Informationen darüber haben, über welche Rechnermodule die Koordinationsstelle erreicht werden kann. Dadurch kann das Rechnernetzwerk in Form des gerichteten, dezentralen Intranets besonders einfach und vor allem automatisch und selbstständig realisiert werden, ohne dass es eines Masters oder einer ähnlichen Steuerungseinheit bedarf. Der Aufbau des gerichteten, dezentralen Intranets erfolgt vorzugsweise unmittelbar nachdem die Rechnermodule aktiviert oder eingeschaltet und in dem Einsatzgebiet verteilt angeordnet worden sind.

Die der vorliegenden Erfindung zugrundeliegende Aufgabe wird auch durch ein Rechnermodul der eingangs genannten Art gelöst, bei dem
- das Rechnermodul Teil eines Ensembles mehrerer Rechnermodule ist, die zur zufälligen und räumlich verteilten Anordnung in einem Einsatzgebiet von Sicherheits- oder Hilfskräften ausgebildet sind,
- das Rechnermodul Mittel aufweist, um Signale auszusenden, die eine Ortung des Rechnermoduls in dem Einsatzgebiet durch einen Teilnehmer ermöglichen,
- das Rechnermodul Mittel aufweist, um eine Authentifizierung eines in unmittelbarer Nähe zu dem Rechnermodul befindlichen Teilnehmers durchzuführen,
- das Rechnermodul über die Kommunikationsschnittstelle nach erfolgreicher Authentifizierung eines Teilnehmers mit dem Teilnehmer Informationen austauscht,
- in dem Speicherelement Informationen abgespeichert sind, die zumindest Informationen bezüglich Geographie und/oder Infrastruktur in dem Einsatzgebiet umfassen,
- die Kommunikationsschnittstelle ausgebildet ist, zumindest einen Teil der in dem Speicherelement abgespeicherten Informationen an den authentifizierten Teilnehmer zu übertragen,
- das Rechnermodul eine auf eine voraussichtliche Dauer des Einsatzes der Sicherheits- oder Hilfskräfte in dem Einsatzgebiet beschränkte Lebensdauer aufweist, und
- das Rechnermodul ausgebildet ist, nach Ablauf seiner Lebensdauer inaktiv zu werden und keine Signale mehr auszusenden, die eine Ortung des Rechnermoduls in dem Einsatzgebiet ermöglichen, und keinen Informationsaustausch mit authentifizierten Teilnehmern mehr durchzuführen.

Gemäß einer vorteilhaften Weiterbildung der vorliegenden Erfindung wird vorgeschlagen, dass das Rechnermodul Mittel zur Ausführung eines Verfahrens nach einem der Ansprüche 3 bis 13 aufweist. Vorzugsweise hat das Rechnermodul Informationen bezüglich seiner Position in dem Einsatzgebiet. Die Mittel zum Aussenden der Signale sind vorzugsweise ausgebildet, diese Positionsinformationen auszusenden, um die Ortung des Rechnermoduls in dem Einsatzgebiet durch einen Teilnehmer zu ermöglichen. Ferner wird vorgeschlagen, dass die Positionsinformationen in dem Speicherelement des Rechnermoduls unmittelbar vor der zufälligen und räumlich verteilten Anordnung der Rechnermodule des Ensembles in dem Einsatzgebiet abgespeichert sind. Alternativ kann das Rechnermodul ein Satellitennavigationssystem zur automatischen Ermittlung der Positionsinformationen des Rechnermoduls aufweisen. Es ist aber auch denkbar, dass die Mittel zum Aussenden der Signale zur Ortung des Rechnermoduls ausgebildet sind, in regelmäßigen zeitlichen Abständen ein Beacon-Signal auszusenden.

Gemäß einer bevorzugten Ausführungsform der vorliegenden Erfindung wird vorgeschlagen, dass das Rechnermodul Mittel aufweist, um mit benachbarten Rechnermodulen des Ensembles von Rechnermodulen Informationen bezüglich der Position der jeweiligen Rechnermodule auszutauschen, so dass letzten Endes jedes der Rechnermodule Informationen über die Positionen der jeweils benachbarten Rechnermodule hat. Das Rechnermodul übermittelt also eigene Positionsinformationen an benachbarte Rechnermodule, die sich in Reichweite befinden. Anders herum empfängt das Rechnermodul Positionsinformationen von den in Reichweite befindlichen benachbarten Rechnermodulen und speichert diese ab, bspw. in dem Speicherelement.

Außer Positionsinformationen können zueinander benachbarte Rechnermodule auch andere Informationen austauschen. Auf diese Weise kann ein Rechnernetzwerk in Form eines dezentralen Intranets aufgebaut werden. Der Vorteil eines solchen Rechnernetzwerks besteht darin, dass jeweils Informationen nur über eine relativ geringe Entfernung mit einer relativ geringen Sendeleistung an benachbarte Rechnermodule gesendet werden müssen. Für unbefugte Personen ist es wesentlich schwieriger, die über eine solche Funkverbindung über eine relativ kurze Entfernung übermittelten Informationen abzuhören oder abzufangen und zu manipulieren (sog. unlawful interception).

Gemäß einer anderen Weiterbildung der Erfindung wird vorgeschlagen, dass das Rechnermodul Funk-Kommunikationsmittel zum Informationsaustausch mit benachbarten Rechnermodulen des Ensembles von Rechnermodulen über eine Funkverbindung aufweist, um mit den benachbarten Rechnermodulen Informationen bezüglich der Erreichbarkeit einer Koordinationsstelle auszutauschen, die den Einsatz der Sicherheits- oder Hilfskräfte in dem Einsatzgebiet koordiniert, so dass letzten Endes jedes der Rechnermodule Informationen darüber hat, über welche der Rechnermodule die Koordinationsstelle über Funkverbindungen erreicht werden kann. Auf diese Weise kann ein Rechnernetzwerk in Form eines gerichteten dezentralen Intranets aufgebaut werden. Von den einzelnen Rechnermodulen werden Informationen, bspw. in Form der aktualisierten Informationen, in Richtung der Koordinationsstelle nur über diejenigen anderen Rechnermodule des Ensembles übermittelt, die sich auf dem kürzesten Weg zwischen dem die Informationen aussendenden Rechnermodul und der Koordinationsstelle befinden. Die zwischen den Rechnermodulen übermittelten Informationen umfassen vorzugsweise zumindest Informationen bezüglich Geographie und/oder Infrastruktur in dem Einsatzgebiet.

Um eine bidirektionale Kommunikation zwischen dem in der Nähe eines Rechnermoduls befindlichen Teilnehmer und dem Rechnermodul realisieren zu können, ist die Kommunikationsschnittstelle vorteilhafterweise ausgebildet, Informationen von dem authentifizierten Teilnehmer zu empfangen. Die von dem Teilnehmer empfangenen Informationen umfassen vorzugsweise ein Update der Informationen bezüglich Geographie und/oder Infrastruktur in dem Einsatzgebiet.

Gemäß einer besonders bevorzugten Ausführungsform der Erfindung wird vorgeschlagen, dass die Kommunikationsschnittstelle ausgebildet ist, einen kontaktlosen Datenaustausch mit dem authentifizierten Teilnehmer, insbesondere mittels Funktechnik, mit geringer Reichweite zu realisieren. Vorteilhafterweise ist die Kommunikationsschnittstelle ausgebildet, einen Informationsaustausch mittels Funktechnik nach einem NFC (Near Field Communication), nach einem RFID (Radio Frequency Identification), nach einem BlueTooth, insbesondere nach einem BlueTooth Low Energy, oder nach einem UHR-C (Ultra High Rate Cordless) Standard zu realisieren.

NFC (zu deutsch "Nahfeldkommunikation") ist ein internationaler Übertragungsstandard zum kontaktlosen Austausch von Daten per Funktechnik über kurze Strecken von wenigen Zentimetern und einer Datenübertragungsrate von derzeit maximal 424 kBit/s. Bisher kommt diese Technik vor allem in Lösungen für bargeldlose Zahlungen kleiner Beträge zum Einsatz. Erfindungsgemäß wird vorgeschlagen, diese Technik zur Informationsübertragung zwischen einem in einem Einsatzgebiet von Sicherheits- oder Hilfskräften befindlichen Teilnehmer und einem von mehreren in dem Einsatzgebiet verteilt angeordneten Rechnermodulen einzusetzen.

Bei NFC erfolgt die Übertragung kontaktlos, entweder verbindungslos (mit passiven HF (Hochfrequenz)-RFID-Tags nach ISO 14443 oder ISO 15693) oder verbindungsbehaftet (zwischen gleichwertigen aktiven Transmittern). NFC ermöglicht einen Datenaustausch zwischen zwei kurzzeitig ohne besondere Anmeldung gepaarten Geräten, die nahe aneinandergehalten werden.

Mit NFC erfolgt die Zuordnung der gepaarten Geräte (Sende-/ Empfangsgerät des Teilnehmers und Kommunikationsschnittstelle des Rechnermoduls) durch den Teilnehmer, indem er sich in die unmittelbare Nähe des Rechnermoduls stellt und sein Sende-/ Empfangsgerät nahe an die Kommunikationsschnittstelle des Rechnermoduls heranführt. Wenn das Sende-/ Empfangsgerät des Teilnehmers Bestandteil eines Mobil- oder Smartphones oder eines anderen geeigneten Geräts ist, das der Teilnehmer mit sich führt, kann ein Einloggen (Anmelden) des Teilnehmers bei dem Mobil- oder Smartphone bzw. bei dem anderen geeigneten Gerät bereits eine erste Authentifizierung des Teilnehmers gegenüber dem Rechnermodul bieten. Denkbar wäre, dass sich der Teilnehmer darüber hinaus, bspw. mittels eines Passworts, gegenüber dem Rechnermodul authentifizieren muss. Auch jede andere Art einer Authentifizierung des Teilnehmers gegenüber dem Rechnermodul vor der Informationsübertragung wäre denkbar. Zusätzlich können die übertragenen Informationen auf beliebige Art und Weise verschlüsselt werden, um ein unerwünschtes Mitlesen der übertragenen Informationen durch Unbefugte auszuschließen. Vorzugsweise wird ein Mobiltelefon (oder Smartphone) als ohnehin beim Teilnehmer vorhandenes Gerät als Abfragegerät verwendet.

Im Unterschied zu passiven RFID-Tags nach den gültigen Normen ISO/IEC 14443, -15693, -18000-3 ist das NFC-Verfahren schneller (Energieübertragung), weniger raumzehrend (Antennengröße) und vor allem weniger störend (Feldstärke der Energieübertragung).

RFID (zu deutsch "Identifizierung mit Hilfe elektromagnetischer Wellen") ermöglicht die automatische Identifizierung und Lokalisierung von Gegenständen und Lebewesen und erleichtert damit erheblich die Erfassung von Daten. Die zu erfassenden Daten sind auf einer Funketikette (sog. RFID-Tag) abgespeichert. Die Daten umfassen im Stand der Technik üblicherweise eine eindeutige Identifizierung der zu identifizierenden und/oder zu lokalisierenden Gegenstände. Erfindungsgemäß wird vorgeschlagen, dass die Rechnermodule jeweils mit einem solchen RFID-Tag ausgestattet sind. Die darauf abgespeicherten Daten umfassen die Informationen, die von der Koordinationsstelle über eines der Rechnermodule des Ensembles an den authentifizierten Teilnehmer übermittelt werden sollen, insbesondere Informationen bezüglich Geographie und/oder Infrastruktur in dem Einsatzgebiet.

Ein RFID-System besteht aus einem Transponder (RFID-Tag), der sich am oder im Rechnermodul befindet und die zu übermittelnden Informationen enthält, sowie einem Abfragegerät beim Teilnehmer zum Auslesen dieser Informationen. RFID-Transponder können so klein wie ein Reiskorn sein. Darüber hinaus besteht die Möglichkeit RFID-Transponder über ein spezielles Druckverfahren stabiler Schaltungen aus Polymeren herzustellen. Die Vorteile dieser Technik ergeben sich aus der Kombination der geringen Größe, der unauffälligen Auslesemöglichkeit und dem geringen Preis der Transponder (derzeit im EURO-Cent-Bereich).

Die Kopplung zwischen dem Transponder und dem Abfragegerät geschieht durch vom Abfragegerät erzeugte magnetische Wechselfelder geringer Reichweite oder durch hochfrequente Radiowellen. Damit werden nicht nur Daten übertragen, sondern auch der (passive) Transponder mit Energie versorgt. Selbstverständlich können auch aktive Transponder mit eigener Stromversorgung eingesetzt werden, wenn größere Reichweiten erzielt werden sollen und die Kosten der Transponder nicht sehr kritisch sind.

Die RFID-Transponder unterscheiden sich bezüglich Übertragungsfrequenz, Hersteller und Verwendungszweck voneinander. Der Aufbau eines RFID-Transponders umfasst prinzipiell eine Antenne, einen analogen Schaltkreis zum Empfangen und Senden (sog. Transceiver) sowie einen digitalen Schaltkreis und einen permanenten Speicher, in dem die zu übermittelnden Informationen abgespeichert sind. Der digitale Schaltkreis kann bei komplexeren Modellen ein kleiner Mikrocontroller sein. RFID-Transponder verfügen über einen mindestens einmal beschreibbaren Speicher. Werden mehrfach beschreibbare Speicher eingesetzt, können während der Lebensdauer des Transponders weitere Informationen abgelegt werden, bspw. aktualisierte Informationen von dem Teilnehmer. Je nach Anwendungsgebiet der Transponder unterscheiden sich auch die sonstigen Parameter voneinander, wie z.B. Taktfrequenz, Übertragungsrate, Lebensdauer, Kosten pro Einheit, Speicherplatz, Lesereichweite und Funktionsumfang.

Die Übertragung der Informationen erfolgt bspw. nach ISO 18000-1 ff. (ISO 18000-x). Selbstverständlich ist es auch denkbar, dass die Übertragung nach einem proprietären Verfahren erfolgt, das unter Umständen mit den genannten Standards nicht kompatibel ist.

Die RFID-Tags arbeiten je nach Typ im Bereich der Langwelle bei 125-134 kHz, der Kurzwelle bei 13,56 MHz, der UHF bei 865-869 MHz (Europäische Frequenzen) bzw. 950 MHz (US-amerikanische und Asiatische Frequenzbänder) oder der SHF bei 2,45 GHz und 5,8 GHz. HF-Tags (etwa 3 MHz-300 MHz) verwenden Lastmodulation, das heißt, sie verbrauchen durch Kurzschließen einen Teil der Energie des magnetischen Wechselfeldes, das von dem Abfragegerät des Teilnehmers erzeugt wird. Dies kann das Abfragegerät detektieren. Die Antennen eines HF-Tags bilden eine Induktionsspule mit mehreren Windungen. UHF-Tags (ca. 0,3 GHz-3 GHz) hingegen arbeiten im elektromagnetischen Fernfeld zum Übermitteln der Antwort; das Verfahren nennt man modulierte Rückstreuung. Die Antennen sind meist lineare, gefaltete oder spiralige Dipole, der Chip sitzt in der Mitte zwischen den linearen oder mehrfach gewinkelten Dipolarmen des RFID-Tags. Es gibt auch UHF-Tags ohne solche Antennen, deren Reichweite ist extrem kurz, weshalb sie für die Informationsübertragung zwischen den Rechnermodulen und einem authentifizierten Teilnehmer im Einsatzgebiet besonders gut geeignet sind, da dadurch ein unbefugter Zugriff auf die übermittelten Informationen stark erschwert wird.

Die UHF- oder SHF-Technik sind wesentlich komplexer ausgelegt als die LF- oder HF-Technik. Aufgrund ihrer Schnelligkeit können UHF- und SHF-Tags bei einer Passage erheblich längere Datensätze übertragen, weshalb sie für die Informationsübertragung zwischen den Rechnermodulen und einem authentifizierten Teilnehmer im Einsatzgebiet besonders gut geeignet sind, da dadurch auch größere Informationsmengen übertragen werden können.

Es können auch Kryptographiemodule zur Verschlüsselung der übermittelten Informationen (z.B. nach AES, Advanced Encryption Standard) oder externe Sensoren, wie z. B. GPS-Sensoren, in den RFID-Transponder integriert sein.

Bei einer Informationsübertragung nach UHR-C (Ultra High Rate Cordless) werden Millimeterwellen eingesetzt. Dieses Verfahren ist speziell für die schnelle Datenübertragung über kurze Strecken im 60-GHz-Frequenzbereich von 57 bis 64 GHz geeignet. Aufgrund der kurzen Reichweite der Informationsübertragung nach UHR-C wird unbefugtes Abhören verhindert. Durch den Einsatz von Technologien für integrierte Schaltkreise auf Silizium-Germanium-Basis ist der Einsatz von Millimeterwellen-Frequenzen zur Informationsübertragung kostengünstig realisierbar. Mit UHR-C sind derzeit Übertragungsraten von 10 GBit/s über eine Strecke bis zu 3 m realisierbar, so dass sich UHR-C insbesondere für Anwendungen eignet, bei denen in sehr kurzer Zeit große Datenmengen über kurze Distanzen übertragen werden müssen. Aufgrund der großen verfügbaren Bandbreite werden bei UHR-C vorzugsweise einfache Modulationsverfahren wie BPSK und differentielles QPSK verwendet. Diese Modulationsverfahren lassen sich noch mit rein analoger Signalverarbeitung dekodieren.

BlueTooth Low Energy ist eine Funktechnik, mit der sich Geräte in einer Umgebung von etwa 10 Meter vernetzen lassen. Diese Erweiterung ergänzt den Industriestandard BlueTooth. BlueTooth Low Energy sendet im 2,4-GHz-Bereich, verbraucht dabei weniger Energie und ist in der Integration kostengünstiger als BlueTooth 2.1. Dieser neue Protokollstapel ist mit Bluetooth Version 2.1 verträglich, ist aber unabhängig zu konfigurieren. BlueTooth Low Energy ist als Einzel-Chip-Lösung für Kleingeräte und in Kombination mit bisherigen Bluetooth Geräten erhältlich. Bei Bluetooth Low Energy ist die Funkreichweite auf etwa 10 Meter beschränkt. Bei Bluetooth Low Energy werden maximal 1 MBit/s übertragen.

Gemäß einer anderen vorteilhaften Weiterbildung der vorliegenden Erfindung wird vorgeschlagen, dass elektrische und/oder elektronische Bauelement und/oder Baugruppen des Rechnermoduls vollständig vergossen sind. Das Rechnermodul ist also vorzugsweise als eine monolithische Struktur aus einem Harz oder Kunststoff ausgebildet, in das die elektrische und/oder elektronische Bauelement und/oder Baugruppen des Rechnermoduls integriert sind. Damit ergibt sich eines besonders gute Beständigkeit des Rechnermoduls gegen Witterung (Feuchtigkeit, Kälte, Sonneneinstrahlung, Wärme, etc.) und mechanische Belastung (durch einen Aufprall beim Auftreffen auf dem Boden in dem Einsatzgebiet, durch darüber laufende Personen oder darüber fahrende Fahrzeuge, etc.). Vorzugsweise hat das Rechnermodul keinerlei von außen zugängliche, sichtbare Anschlüsse oder Anzeigen. Die gesamte Informationsübertragung zwischen dem Rechnermodul und dem Teilnehmer (zur Authentifizierung und zur Übermittlung der gespeicherten Informationen) erfolgt vorzugsweise über eine Funkverbindung, wobei die Kommunikationsschnittstelle des Rechnermoduls bzw. eine Sende-/ Empfangsantenne im Inneren des Rechnermoduls angeordnet und ebenfalls vergossen ist. Es wäre denkbar, dass die Vergussmasse zumindest teilweise transparent ausgebildet ist, so dass im Inneren des Rechnermoduls angeordnete, ebenfalls vergossene farbige LEDs von außen sichtbar sind, so dass sie dem Teilnehmer Aufschluss über den aktuellen Betriebsmodus des Rechnermoduls (z.B. aktiv, Auslesegerät eines Teilnehmers in Reichweite, Authentifizierung des Teilnehmers erfolgt, Informationsübertragung an den Teilnehmer abgeschlossen, aktualisierte Informationen in dem Speicherelement abgespeichert, etc.) geben können.

Gemäß einer weiteren bevorzugten Ausführungsform der vorliegenden Erfindung wird vorgeschlagen, dass das Rechnermodul eine Schutzeinrichtung aufweist, welche einen unberechtigten Zugriff auf die in dem Speicherelement des Rechnermoduls gespeicherten Informationen verhindert. Die Schutzeinrichtung kann beliebig ausgebildet sein. Entscheidend ist, dass sie einen Versuch eines unberechtigten Zugriffs auf die in dem Speicherelement abgespeicherten Informationen erkennt und in einem solchen Fall zuverlässig für ein Löschen zumindest eines Teils der abgespeicherten Informationen sorgt. Vorteilhafterweise umfasst die Schutzeinrichtung in eine Vergussmasse eingegossene Drähte, die bei einem gewaltsamen Zugriff auf das in der Vergussmasse vergossene Speicherelement des Rechnermoduls durchtrennt werden und dadurch ein automatisches Löschen des Speicherelements veranlassen.

Gemäß einer anderen vorteilhaften Weiterbildung der Erfindung wird vorgeschlagen, dass das Rechnermodul Mittel zum selbstständigen Bewegen in dem Einsatzgebiet aufweist. Die Bewegungsmittel können bspw. Räder oder mehrgelenkige Füße sein. Mit den Füßen könnte sich das Rechnermodul nach Art einer Spinne oder eines Krebses in dem Einsatzgebiet bewegen und sich selbstständig eine geeignete Tarnung suchen.

Gemäß einer weiteren bevorzugten Ausführungsform wird vorgeschlagen, dass das Rechnermodul Mittel zur Ermittlung einer Intensität von Sonnenstrahlung aufweist und die Mittel zum selbstständigen Bewegen derart ansteuert, dass sich das Rechnermodul selbstständig in einen Schatten bewegt. Ein Schatten bzw. die Sonne kann mittels eines Hell-Dunkel-Sensors erkannt werden, der Bestandteil des Rechnermoduls sein kann. Die Sensorsignale des Hell-Dunkel-Sensors können in dem Rechnermodul ausgewertet und die Mittel zum selbstständigen Bewegen des Rechnermoduls entsprechend angesteuert werden, damit sich das Rechnermodul in einen Schatten bewegt. Dort ist es gut getarnt und kann von Unbefugten wesentlich schwieriger erkannt werden.

Schließlich wird die der vorliegenden Erfindung zugrundeliegende Aufgabe auch durch ein Ensemble mehrerer erfindungsgemäßer Rechnermodule gelöst. Dieses Ensemble mehrerer Rechnermodule bildet im einfachsten Fall eine Infrastruktur von mehreren in dem Einsatzgebiet verteilt angeordneten "Datentankstellen", von denen in dem Einsatzgebiet befindliche Teilnehmer Informationen abrufen können. Die Rechnermodule können durch die Teilnehmer geortet werden, umfassen ein Speicherelement, auf dem die Informationen abgespeichert sind, und umfassen eine Kommunikationsschnittstelle, über die der Teilnehmer die Informationen mit Hilfe eines geeigneten Auslesegeräts auslesen kann. In einer Weiterbildung kann der Teilnehmer auch selbst aktualisierte Informationen in den Rechnermodulen abspeichern. In diesem Fall ist die Kommunikationsschnittstelle ausgebildet, dass sie auch Informationen von dem Teilnehmer empfangen kann, die dann in dem Speicherelement abgespeichert werden. In einer Ausbaustufe verfügen die Rechnermodule über Mittel zur Realisierung einer Funkverbindung zu benachbarten Rechnermodulen, so dass ein dezentrales Intranet aufgebaut werden kann. Die Rechnermodule können über die Funkverbindungen untereinander Informationen austauschen. In einer weiteren Ausbaustufe hat zumindest eines der Rechnermodule eine Funkverbindung zu der Koordinationsstelle und jedes Rechnermodul verfügt über Informationen, über welche der anderen Rechnermodule es die Koordinationsstelle mittels Funkverbindung auf dem kürzesten Weg erreichen kann. Auf diese Weise kann ein gerichtetes dezentrales Intranet aufgebaut werden. Die Rechnermodule können über die Funkverbindungen untereinander und mit der Koordinationsstelle Informationen austauschen.

Weitere Merkmale und Vorteile der vorliegenden Erfindung werden nachfolgend anhand der Figuren näher erläutert. Es zeigen:
Fig. 1 ein Einsatzgebiet, in dem Sicherheits- oder Hilfskräfte eingesetzt werden und in dem eine Informationsübertragung zwischen einer Koordinationsstelle, die den Einsatz koordiniert, und einem Teilnehmer als Teil der Sicherheits- oder Hilfskräfte nach dem erfindungsgemäßen Verfahren realisiert wird;
Fig. 2 eine schematische Ansicht eines erfindungsgemäßen Rechnerelements gemäß einer bevorzugten Ausführungsform;
Fig. 3 eine schematische Ansicht eines erfindungsgemäßen Rechnerelements gemäß einer anderen bevorzugten Ausführungsform; und
Fig. 4 eine schematische Ansicht eines erfindungsgemäßen Rechnerelements gemäß einer weiteren bevorzugten Ausführungsform.

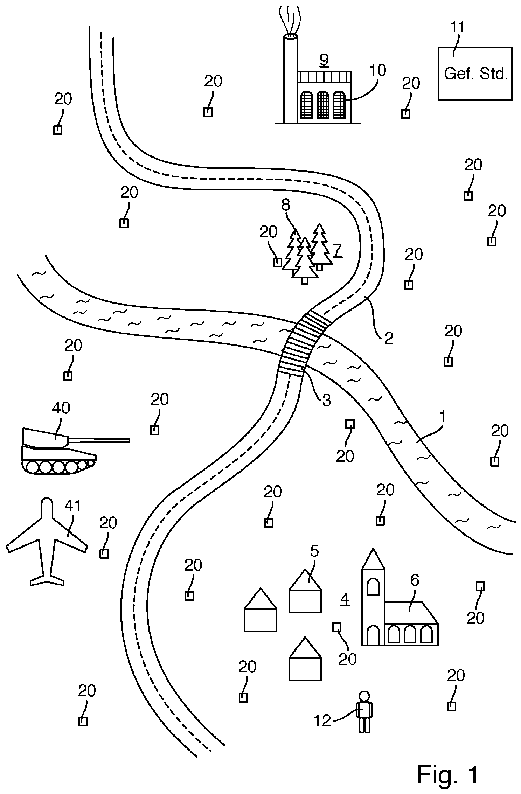

In Figur 1 ist ein Geländeabschnitt dargestellt, in dem Sicherheits- und/oder Hilfskräfte eingesetzt werden. Der dargestellte Geländeabschnitt entspricht also einem Einsatzgebiet der Sicherheits- oder Hilfskräfte. "Hilfskräfte" ist ein Sammelbegriff für Katastrophenhelfer eines Staates oder einer Organisation (z.B. Rettungsdienst, Notarzt, Feuerwehr, technisches Hilfswerk, zivile Helfer etc.), die bspw. nach einer Umweltkatastrophe (z.B. einem Erdbeben, einem Unwetter, einem Vulkanausbruch, einem Tsunami, etc.) oder nach einer sonstigen Katastrophe (z.B. einem Bomben- oder sonstigen Attentat, einem Bombenangriff, einem Zugunglück, einer Massenkarambolage mit Kraftfahrzeugen, einem Großbrand, etc.) für Hilfe sorgen. Die Katastrophenhelfer können dabei erste Hilfe leisten, Verschüttete bergen, Brände bekämpfen und/oder zerstörte Infrastruktur (z.B. Straßen, Wasser- und Energieversorgung, Abwasserleitungen, Flughäfen, Häfen, Krankenhäuser, etc.) wieder instand setzen. "Sicherheitskräfte" ist ein Sammelbegriff für Exekutivorgane eines Staates oder einer Organisation, die der Durchsetzung des Gewaltmonopols des Staates oder der Organisation und der Bewahrung oder Wiederherstellung der inneren Sicherheit dienen. Dazu gehören unter anderem Polizei, paramilitärische Einheiten, Geheimpolizei, Inlandsgeheimdienste und auch das Militär. Sicherheitskräfte ergreifen bspw. in einer sicherheitskritischen Situation (z.B. einer Großdemonstration, einem Angriff auf die innere Sicherheit eines Landes, einem Kriegseinsatz, etc.) geeignete Gegenmaßnahmen.

Das in Figur 1 beispielhaft dargestellte Einsatzgebiet umfasst einen im Wesentlichen in Ost-West-Richtung fließenden Fluss 1, eine im Wesentlichen in Nord-Süd-Richtung verlaufende Straße 2, wobei die Straße 2 den Fluss 1 über eine Brücke 3 überquert. In dem Einsatzgebiet gibt es ein Dorf oder eine Stadt 4 mit Häusern 5, einer Kirche 6 und gegebenenfalls weiteren Gebäuden. Ferner umfasst das dargestellte Einsatzgebiet einen Wald 7 mit mehreren Bäumen oder Büschen 8 und eine Industrieanlage 9 mit einer Fabrik 10. Oben rechts ist in dem Einsatzgebiet eine Koordinationsstelle 11 dargestellt, die in dem Beispiel als ein Gefechtsstand ausgebildet ist. Die Koordinationsstelle 11 koordiniert den Einsatz der Sicherheits- oder Hilfskräfte in dem Einsatzgebiet. Schließlich ist in dem Einsatzgebiet beispielhaft ein Teilnehmer 12 als Teil der Sicherheits- oder Hilfskräfte dargestellt. Der Teilnehmer 12 ist bspw. als ein Soldat (Infanterist) ausgebildet. Selbstverständlich können in dem Einsatzgebiet auch mehrere Teilnehmer 12 angeordnet sein. Nachfolgend wird das erfindungsgemäße Verfahren zur Informationsübertragung zwischen der Koordinationsstelle 11 und dem Teilnehmer 12 im Detail erläutert.

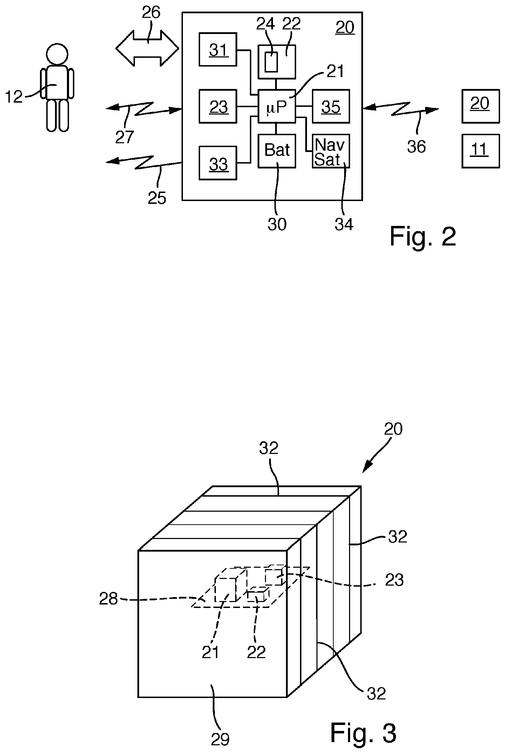

Die Informationsübertragung zwischen der Kommandostelle 11 und dem Teilnehmer 12 dient dazu, den Teilnehmer 12 mit aktuellen Informationen, insbesondere bezüglich Geographie und/oder Infrastruktur, bezüglich des Einsatzgebiets zu versorgen. Das erfindungsgemäße Verfahren ist dadurch gekennzeichnet, dass
- ein Ensemble mehrerer Rechnermodule 20 vorgesehen wird, die jeweils einen Mikroprozessor 21 (vgl. Figur 2), ein Speicherelement 22, und eine Kommunikationsschnittstelle 23 zur Kommunikation mit in dem Einsatzgebiet befindlichen Teilnehmern 12 aufweisen,
- in den Speicherelementen 22 der Rechnermodule 20 die zur Übertragung an den Teilnehmer 12 bestimmten Informationen 24 abgespeichert werden,
- nach dem Abspeichern der Informationen 24 in den Speicherelementen 22 der Rechnermodule 20 diese in dem Einsatzgebiet zufällig und räumlich verteilt angeordnet werden (vgl. Figur 1),
- von den in dem Einsatzgebiet angeordneten Rechnermodulen 20 Signale 25 ausgesandt werden, die eine Ortung der Rechnermodule 20 durch den Teilnehmer 12 erlauben,
- zumindest von einem durch den Teilnehmer 12 georteten Rechnermodul 20 eine Authentifizierung 26 des in der Nähe des georteten Rechnermoduls 20 befindlichen Teilnehmers 12 durchgeführt wird,
- zumindest von dem georteten Rechnermodul 20 über die Kommunikationsschnittstelle 23 nach erfolgreicher Authentifizierung 26 des Teilnehmers 12 zumindest ein Teil der in dem Speicherelement 22 des georteten Rechnermoduls 20 abgespeicherten Informationen 24 an den in der Nähe des georteten Rechnermoduls 20 befindlichen authentifizierten Teilnehmer 12 übertragen werden (Informationsübertragung 27), und
- die Rechnermodule 20 des Ensembles nach Ablauf einer auf eine voraussichtliche Dauer des Einsatzes der Sicherheits- oder Hilfskräfte in dem Einsatzgebiet beschränkten Lebensdauer inaktiv werden und keine Signale 25 mehr aussenden, die eine Ortung der Rechnermodule 20 in dem Einsatzgebiet erlauben würden, und keine Informationsübertragung 27 an in der Nähe befindliche authentifizierte Teilnehmern 20 mehr durchführen.

Das Ensemble der Rechnermodule 20, die in dem Einsatzgebiet verstreut angeordnet werden, kann zig, hunderte, tausende oder gar noch mehr einzelne Rechnermodule 20 umfassen. Die Rechnermodule 20 eines Ensembles sind vorzugsweise identisch ausgebildet. Die schematische Ausgestaltung eines solchen Rechnermoduls 20 ist beispielhaft in Figur 2 dargestellt. Die elektrischen Komponenten (z.B. Mikroprozessor 21, Speicherelement 22, Kommunikationsschnittstelle 23 u.a.) sind vorzugsweise auf einer Platine 28 angeordnet und über Leiterbahnen auf der Platine 28 elektrisch kontaktiert. Sämtliche elektrischen Komponenten werden anschließend durch eine Vergussmasse 29 aus Harz oder Kunststoff vergossen, so dass sich ein monolithisches Äußeres des Rechnermoduls 20 ergibt (vgl. Figur 3). Dadurch ist das Rechnermodul 20 besonders widerstandsfähig gegen thermische, chemische, witterungsbedingte und mechanische Belastungen. Vorzugsweise ist die Außenfläche des Rechnermoduls 20 als eine vollständig geschlossene Fläche ohne Unterbrechungen, Durchbrüche o.ä. für Anzeigen, Schalter, Knöpfe, Buchsen, Stecker, etc. ausgebildet. Die Kommunikationsschnittstelle 23 umfasst vorzugsweise ein Funkmodul, das im Inneren der Vergussmasse 29 angeordnet ist, so dass die Informationsübertragung 27 zwischen dem Rechnermodul 20 und dem in der Nähe angeordneten authentifizierten Teilnehmer 12 durch die Vergussmasse 29 hindurch erfolgt. Die Rechnermodule 20 haben vorzugsweise eine Würfelform. Selbstverständlich können sie auch jede beliebige andere Form aufweisen, bspw. eine Quader-, Kugel-, Zylinder- oder mehrseitige Prismaform. Die Maße der Rechnermodule 20 können im Bereich zwischen einigen Millimetern und einigen zig Zentimetern liegen. Selbstverständlich sind auch beliebig andere Maße denkbar. Die Rechnermodule 20 können durch ein Landfahrzeug 40 oder Luftfahrzeug 41 in dem Einsatzgebiet ausgebracht, d.h. zufällig räumlich verteilt angeordnet, werden.

Die beschränkte Lebensdauer der Rechnermodule 20 ist unter Sicherheitsaspekten vorteilhaft, da es unbefugten Dritten auf diese Weise erschwert wird, auf die abgespeicherten Informationen 24 zuzugreifen. Die Lebensdauer der Rechnermodule 20 entspricht in etwas der voraussichtlichen oder geplanten Dauer des Einsatzes der Sicherheits- oder Hilfskräfte in dem Einsatzgebiet. Selbst wenn nach dem Abzug der Sicherheits- oder Hilfskräfte aus dem Einsatzgebiet unbefugte Dritte (z.B. Rebellen, gegnerische Soldaten, etc.) in das Einsatzgebiet nachrücken und auf ein Rechnermodul 20 treffen, können sie die darin gespeicherten Informationen 24 nicht auslesen, da das Rechnermodul 20 nach Ablauf seiner Lebensdauer nicht mehr aktiv ist. Die begrenzte Lebensdauer des Rechnermoduls 20 kann bspw. mittels einer Batterie 30 mit beschränkter Kapazität realisiert werden. Alternativ können die Rechnermodule 20 auch über Mittel zum Inaktivschalten der Rechnermodule 20 verfügen, bspw. indem die Energieversorgung der elektrischen Komponenten, bspw. zum Mikroprozessor 21, unterbrochen wird. Bei den Rechnermodulen 20 handelt es sich vorzugsweise um Wegwerfartikel, d.h. sie werden nach dem Ende ihrer Lebensdauer nicht wieder eingesammelt und wieder verwertet. Aus diesem Grund ist es besonders wichtig, dass die Rechnermodule 20 kostengünstig hergestellt, mit den Informationen 24 programmiert und in dem Einsatzgebiet ausgebracht werden können.

Ferner ist in den Rechnermodulen 20 zur Verhinderung eines Datenzugriffs durch Unbefugte die Authentifizierungsprozedur 26 vorgesehen, die mittels eines Authentifizierungsmoduls 31 realisiert ist. Falls eine Authentifizierung des Teilnehmers 12 mehrmals hintereinander fehlgeschlagen ist, kann aus Sicherheitsgründen ein automatisches Löschen des Speicherelements 22 und der darauf abgespeicherten Informationen 24 vorgesehen sein. Das Authentifizierungsmodul 31 kann auf beliebige Weise eine Authentifizierung des Teilnehmers 12 durchführen. Denkbar sind bspw. die nachfolgenden Möglichkeiten:
- Der Teilnehmer 12 erzeugt ein Magnetfeld, das einen in dem Authentifizierungsmodul 31 angeordneten und auf das Magnetfeld ansprechenden Schalter schließt und eine Informationsübertragung 27 nur bei geschlossenem Schalter möglich ist, d.h. die Kommunikationsschnittstelle 23 wird durch Öffnen bzw. Schließen des Schalters deaktiviert bzw. aktiviert. Es ist auch denkbar, über das Magnetfeld Authentifizierungsdaten, bspw. ein Password, von dem Teilnehmer 12 an das Authentifizierungsmodul 31 zu übertragen und zu verifizieren. Wenn ein korrektes Password eingegeben wird, wird der Schalter geschlossen.
- Das Authentifizierungsmodul 31 kann ein Funkmodul umfassen, welches eine Funkverbindung zwischen dem Modul 31 und dem Teilnehmer 12 zur Übertragung von Authentifizierungsinformationen, bspw. in Form eines Passwords, herstellt.
- Das Authentifizierungsmodul 31 kann ein Audiomodul umfassen, welches eine akustische Übertragung von Authentifizierungsinformationen, bspw. in Form eines Passwords, von dem Teilnehmer 12 an das Modul 31 herstellt. Insbesondere ist an eine Informationsübertragung mittels Ultraschall gedacht.
- Das Authentifizierungsmodul 31 kann ein Videomodul umfassen, welches eine optische Übertragung von Authentifizierungsinformationen, bspw. in Form eines Passwords, von dem Teilnehmer 12 an das Modul 31 herstellt. Insbesondere ist an eine Informationsübertragung mittels Infrarot-Strahlung gedacht.

Zur Verbesserung der Datensicherheit ist es ferner denkbar, dass die Außenseite der Rechnermodule 20 mit einer Farbe, einer Struktur (z.B. matt, glänzende Oberfläche, Rillen oder sonstige Vertiefungen, beliebige Auswölbungen, etc.) oder einem Muster versehen ist, welches eine Tarnung des Rechnermoduls 20 in dem Einsatzgebiet erleichtert und damit ein Auffinden der Rechnermodule 20 durch unbefugte Dritte erschwert. Zur weiteren Verbesserung der Datensicherheit ist es denkbar, dass in der Vergussmasse 29 Drähte 32 (vgl. Figur 3) eingegossen sind, die mit einem Thyristor-gesteuerten Lösch-Modul in Verbindung stehen, welches ausgebildet ist, die in dem Speicherelement 22 abgespeicherten Informationen 24 auf Befehl zu löschen. Wenn unbefugte Dritte versuchen, durch die Vergussmasse 29 hindurch auf das Speicherelement 22 zuzugreifen werden die Drähte 32 durchtrennt und schalten den Thyristor, so dass ein Löschprozess des Speicherelements 22 eingeleitet wird. In Figur 3 sind die Drähte 32 lediglich auf zwei Seiten des Rechnermoduls 20 dargestellt. Selbstverständlich ist es denkbar, die Drähte 32 auf mehreren Seiten, vorzugsweise auf allen Seiten, anzuordnen.

Vor dem Ausbringen der Rechnermodule 20 in dem Einsatzgebiet werden die an die Teilnehmer 12 zu übertragenden Informationen 24 auf den Speicherelementen 22 abgespeichert. Vor dem Ausbringen der Rechnermodule 20 werden diese auch aktiviert, falls erforderlich. Nach dem Ausbringen der Rechnermodule 20 in dem Einsatzgebiet senden diese mittels eines Ortungssignalmoduls 33 Signale 25 aus, welche eine Ortung der Rechnermodule 20 in dem Einsatzgebiet möglich machen. Die Signale 25 können einfache Beacon-Signale darstellen, die von mehreren in Reichweite zu einem Rechnermodul 20 befindlichen Teilnehmern 12 empfangen werden können, so dass ein Anpeilen bzw. sogar eine Ortung der Rechnermodule 20 möglich ist. Die Beacon-Signale 25 können auch Informationen enthalten, bspw. eine eindeutige Kennung des Rechnermoduls 20 und/oder einen Zeitpunkt, zu dem das Beacon-Signal 25 ausgesandt wurde. Alternativ ist es denkbar, dass die ausgesandten Ortungssignale 25 Positionsinformationen der Rechnermodule 20 umfassen, anhand der ein in Reichweite befindlicher, die Signale 25 empfangender Teilnehmer 12 die genaue Position des Rechnermoduls bestimmen kann. Vorzugsweise umfasst das Rechnermodul 20 ein Satellitennavigationssystem 34 (z.B. GPS, Galileo, Glonass, Compass), das dem Rechnermodul 20 bzw. dem Ortungssignalmodul 33 Informationen über die aktuelle Position des Rechnermoduls 20 in dem Einsatzgebiet liefert, die dann mittels des Signals 25 ausgesandt werden können. Alternativ wäre es auch denkbar, dass unmittelbar vor dem Ausbringen der Rechnermodule 20 in dem Einsatzgebiet die Position des Luft- oder Landfahrzeugs in dem Einsatzgebiet ermittelt und die Position in dem Rechnermodul 20 abgespeichert wird. Die Position des Luft- oder Landfahrzeugs zum Zeitpunkt des Ausbringens eines Rechnermoduls 20 entspricht in etwa der Position, in der das Rechnermodul 20 in dem Einsatzgebiet zum Liegen kommt. Auch diese Positionsinformation kann mittels des Signals 25 ausgesandt werden und ermöglicht eine Ortung des Rechnermoduls 20 durch Teilnehmer 12, die sich in Reichweite des Signals 25 befinden.

Die Informationsübertragung 27 zwischen einem in der Nähe befindlichen, authentifizierten Teilnehmer 12 und dem Rechnermodul 20 erfolgt über eine relativ kurze Distanz, bspw. wenige Millimeter bis zu einigen zig Zentimetern, um es unbefugten Dritten zu erschweren, die Datenübertragung abzuhören bzw. zu manipulieren. Die unbefugten Personen müssten in unmittelbarer Nähe zu dem Rechnermodul 20 stehen, um überhaupt die Informationsübertragung 27 empfangen zu können. Ferner ist es denkbar, dass die im Rahmen der Informationsübertragung 27 übermittelten Informationen verschlüsselt werden. Dafür kann ein beliebiges Verschlüsselungsverfahren eingesetzt werden.

In der beschriebenen Form dienen die Rechnermodule 20 als reine "Datentankstelle" für die Teilnehmer 12 in dem Einsatzgebiet. Die Informationsübertragung 27 zwischen der Koordinationsstelle 11 und dem Teilnehmer 12 erfolgt also nicht in Echtzeit über eine direkte Funkverbindung zwischen der Koordinationsstelle 11 und dem Teilnehmer 12. Vielmehr werden die zu übertragenden Informationen offline "weitergereicht". In einer Weiterbildung ist es ferner denkbar, dass die Informationsübertragung 27 zwischen den Rechnermodule 20 und den Teilnehmern 12 bidirektional erfolgt. In diesem Fall umfassen die Kommunikationsschnittstellen 23 eine Sende-/Empfangseinheit, die auch Informationen von den Teilnehmern 12 empfangen kann. Die empfangenen Informationen können bspw. aktualisierte Informationen sein. Die empfangenen Informationen können in dem Speicherelement 22 abgespeichert werden, so dass sie zum Abruf zu einem späteren Zeitpunkt durch nachrückende Teilnehmer 12 zur Verfügung stehen. Die aktualisierten Informationen betreffen vorzugsweise Geographie und/oder Infrastruktur in dem Einsatzgebiet. Insbesondere können die aktualisierten Infrastrukturinformationen den aktuellen Zustand von Straßen 2, Brücken 3, der Wasser- und Energieversorgung, von Abwasserleitungen, von Flughäfen, Häfen oder Krankenhäusern etc. betreffen. Die aktuellen Geographieinformationen betreffen bspw. den Pegelstand, die Fließgeschwindigkeit, die Temperatur des Flusses 1, aktuelle und zukünftige Wetterinformationen, die Position von kurzfristig eingerichteten Krankenhäusern oder Gefangenenlagern, die aktuelle Passierbarkeit von Mooren und Sümpfen etc.

Gemäß einer weiteren Ausbaustufe ist es denkbar, dass die Rechnermodule auch weitere Kommunikationsmittel 35 aufweisen, über welche die Rechnermodule 20 untereinander Informationen übertragen und austauschen können. Auf diese Weise können bspw. aktualisierte Informationen, die eines der Rechnermodule 20 von einem Teilnehmer 12 empfangen hat, an die anderen Rechnermodule 20 des Ensembles übermittelt werden. Mittels der Informationsübertragung 36 zwischen den Rechnermodulen 20 untereinander kann also ein dezentrales Intranet realisiert werden. Auch die Informationsübertragung 36 erfolgt lediglich über eine beschränkte Distanz, bspw. mehrere zig oder einige hundert Meter. Auch diese Maßnahme kann das Abhören der Informationsübertragung 36 durch unbefugte Dritte erschweren. Die Reichweite kann bspw. abhängig von der Gesamtzahl der Rechnermodule 20 des Ensembles und der Größe des Einsatzgebiets so bestimmt werden, dass sich mit einer hohen Wahrscheinlichkeit (z.B. > 90%) zu einem Rechnermodul 20 mindestens ein anderes Rechnermodul 20 in Reichweite befindet.

Die Rechnermodule 20 können über die Kommunikationsmittel 35 Informationen bezüglich ihrer Position mit benachbarten Rechnermodulen 20 austauschen, so dass letzten Endes jedes der Rechnermodule 20 des Ensembles Informationen über die Positionen der jeweils benachbarten Rechnermodule 20 hat. Die Kommunikationsmittel 35 sind vorzugsweise zur Realisierung einer Funkverbindung ausgebildet. Ferner ist es denkbar, dass die Kommunikationsmittel 35 im Rahmen der Informationsübertragung 36 mit benachbarten Rechnermodulen 20 Informationen bezüglich der Erreichbarkeit der Koordinationsstelle 11 von einem bestimmten Rechnermodul 20 aus austauschen, so dass letzten Endes jedes der Rechnermodule 20 des Ensembles Informationen darüber hat, über welche der anderen Rechnermodule 20 die Koordinationsstelle 11 erreicht werden kann. Auf diese Weise kann jedes der Rechnermodule 20 über bestimmte andere Rechnermodule 20 die Koordinationsstelle 11 erreichen und mit dieser Informationen austauschen. Auf diese Weise ist es möglich, dass aktualisierte Informationen an die Koordinationsstelle 11 übertragen werden und von der Koordinationsstelle 11 aus aktualisierte oder ergänzende Informationen an die Rechnermodule 20 in dem Einsatzgebiet übertragen werden und dort zum Abruf durch die Teilnehmer 12 zur Verfügung stehen. Es kann also ein Rechnernetzwerk nach Art eines gerichteten dezentralen Intranets aufgebaut werden. Statt die zu übermittelnden Informationen an alle erreichbaren Rechnermodule 20 zu übermitteln, werden die von einem Rechnermodul 20 für die Koordinationsstelle 11 bestimmten Informationen vorzugsweise über diejenigen anderen Rechnermodule 20 übertragen, die auf dem kürzesten Übertragungsweg zwischen dem sendenden Rechnermodul 20 und der Koordinationsstelle 11 liegen. Die dazwischen angeordneten anderen Rechnermodule 20 bilden sozusagen Relaisstationen.

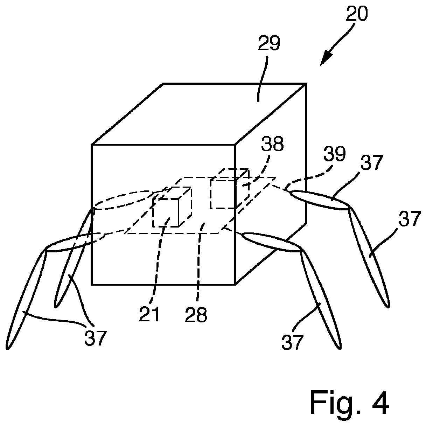

In Figur 4 ist ein weiteres Ausführungsbeispiel des erfindungsgemäßen Rechnermoduls 20 dargestellt. Es unterscheidet sich von den bisher beschriebenen Rechnermodulen 20 insbesondere dadurch, dass es Mittel zum selbstständigen Bewegen des Rechnermoduls 20 in dem Einsatzgebiet aufweist. Die Bewegungsmittel umfassen in dem dargestellten Ausführungsbeispiel mehrere mehrgelenkige Beine 37, mindestens ein Antriebselement 38, bspw. in Form eines oder mehrerer Elektromotoren, Elektromagnete oder Piezoaktoren, Getriebemittel 39, um eine Bewegung des Antriebselements 38 in eine Betätigungsbewegung zur Bewegung der Beine 37 umzusetzen, sowie eine Bewegungssteuerung, die bspw. in Form eines Computerprogramms ausgebildet sein kann, das auf dem Mikroprozessor 21 abläuft. Selbstverständlich können statt der Beine 37 auch Räder, Rollen o.ä. vorgesehen sein. Die automatische Steuerung der Bewegung des Rechnermoduls 20 erfolgt bspw. anhand der Sensorsignale eines Helligkeitssensors, der Sonnenstrahlen detektieren kann und das Rechnermodul 20 durch Aktivieren des mindestens einen Antriebselements 38 in den Schatten bewegt.

## Patentansprüche

1. Verfahren zur Realisierung einer Informationsübertragung (27) von einer Koordinationsstelle (11), die einen Einsatz von Sicherheits- oder Hilfskräften in einem Einsatzgebiet koordiniert, zu einem in dem Einsatzgebiet befindlichen Teilnehmer (12) als Teil der Sicherheits- oder Hilfskräfte, wobei
- die zu übertragenden Informationen (24) zumindest Informationen bezüglich Geographie und/oder Infrastruktur in dem Einsatzgebiet umfassen,
- ein Ensemble mehrerer Rechnermodule (20) vorgesehen wird, die jeweils einen Mikroprozessor (21), ein Speicherelement (22), und eine Kommunikationsschnittstelle (23) zur Kommunikation mit in dem Einsatzgebiet befindlichen Teilnehmern (12) aufweisen, **dadurch gekennzeichnet, dass**
- in den Speicherelementen (22) der Rechnermodule (20) die zur Übertragung an den Teilnehmer (12) bestimmten Informationen (24) abgespeichert werden,
- nach dem Abspeichern der Informationen (24) in den Speicherelementen (22) der Rechnermodule (20) diese in dem Einsatzgebiet zufällig und räumlich verteilt angeordnet werden,
- von den in dem Einsatzgebiet angeordneten Rechnermodulen (20) Signale (25) ausgesandt werden, die eine Ortung der Rechnermodule (20) durch den Teilnehmer (12) erlauben,
- zumindest von einem durch den Teilnehmer (12) georteten Rechnermodul (20) eine Authentifizierung (26) des in der Nähe des georteten Rechnermoduls (20) befindlichen Teilnehmers (12) durchgeführt wird,
- zumindest von dem georteten Rechnermodul (20) über die Kommunikationsschnittstelle (23) nach erfolgreicher Authentifizierung (26) des Teilnehmers (12) zumindest ein Teil der in dem Speicherelement (22) des georteten Rechnermoduls (20) abgespeicherten Informationen (24) an den in der Nähe des georteten Rechnermoduls (20) befindlichen authentifizierten Teilnehmer (12) übertragen werden (27), und
- die Rechnermodule (20) des Ensembles nach Ablauf einer auf eine voraussichtliche Dauer des Einsatzes der Sicherheits- oder Hilfskräfte in dem Einsatzgebiet beschränkten Lebensdauer inaktiv werden und keine Signale (25) mehr aussenden, die eine Ortung der Rechnermodule (20) in dem Einsatzgebiet erlauben würden, keine Authentifizierung (26) und/oder keine Informationsübertragung (27) an in der Nähe befindliche authentifizierte Teilnehmer (12) mehr durchführen.

2. Verfahren nach Anspruch 1, **dadurch gekennzeichnet, dass** die Rechnermodule (20) zur zufälligen und räumlich verteilten Anordnung in dem Einsatzgebiet aus einem über das Einsatzgebiet fliegenden Luftfahrzeug (41) oder aus einem durch das Einsatzgebiet fahrenden Landfahrzeug (40) verstreut werden.

3. Verfahren nach Anspruch 1 oder 2, **dadurch gekennzeichnet, dass** die von den Rechnermodulen (20) ausgesandten Signale (25) Informationen bezüglich ihrer Position in dem Einsatzgebiet beinhalten, um eine Ortung der Rechnermodule (20) in dem Einsatzgebiet durch die in dem Einsatzgebiet befindlichen Teilnehmer (12) zu ermöglichen.

4. Verfahren nach Anspruch 3, **dadurch gekennzeichnet, dass** unmittelbar vor der zufälligen und räumlich verteilten Anordnung der Rechnermodule (20) des Ensembles in dem Einsatzgebiet die aktuellen Positionsinformationen in den Speicherelementen (22) der Rechnermodule (20) abgespeichert werden.

5. Verfahren nach Anspruch 3, **dadurch gekennzeichnet, dass** die Rechnermodule (20) jeweils ein Satellitennavigationssystem (34) aufweisen und dass die Positionsinformationen eines Rechnermoduls (20) nach der Anordnung in dem Einsatzgebiet von dem Satellitennavigationssystem (34) automatisch ermittelt werden.

6. Verfahren nach einem der Ansprüche 1 bis 5, **dadurch gekennzeichnet, dass** die von den Rechnermodulen (20) ausgesandten Signale (25) in regelmäßigen zeitlichen Abständen ausgesandte Beacon-Signale sind, die eine Peilung und/oder Ortung der Rechnermodule (20) in dem Einsatzgebiet erlauben.

7. Verfahren nach einem der Ansprüche 1 bis 6, **dadurch gekennzeichnet, dass** die Informationsübertragung (27) zwischen einem Rechnermodul (20) und dem in der Nähe angeordneten authentifizierten Teilnehmer (12) bidirektional ausgebildet ist und dass Informationen, die das Rechnermodul (20) von dem Teilnehmer (12) empfangen hat, in dem Speicherelement (22) des Rechnermoduls (20) abgespeichert werden.

8. Verfahren nach einem der Ansprüche 1 bis 7, **dadurch gekennzeichnet, dass** die Rechnermodule (20) auch untereinander, vorzugsweise über eine Funkverbindung (36), Informationen austauschen.

9. Verfahren nach Anspruch 8, **dadurch gekennzeichnet, dass** jedes der Rechnermodule (20) Informationen bezüglich seiner Position in dem Einsatzgebiet aussendet (36), die von zu dem jeweiligen Rechnermodul (20) benachbarten, in Reichweite der ausgesandten Positionsinformationen befindlichen Rechnermodulen (20) empfangen werden, so dass die Rechnermodule (20) jeweils Informationen über die Position der benachbarten Rechnermodule (20) haben.

10. Verfahren nach Anspruch 9, **dadurch gekennzeichnet, dass** in den Speicherelementen (22) der Rechnermodule (20) Informationen bezüglich einer Position der Koordinationsstelle (11) abgespeichert und Informationen bezüglich der eigenen Position vorhanden sind und dass jedes der Rechnermodule (20) in Abhängigkeit von diesen Positionsinformationen diejenigen benachbarten Rechnermodule (20) auswählt und Informationen mit diesen austauscht, die auf dem kürzesten Weg von dem jeweiligen Rechnermodul (20) zu der Koordinationsstelle (11) liegen.

11. Verfahren nach Anspruch 10, **dadurch gekennzeichnet, dass** falls die Koordinationsstelle (11) von einem der Rechnermodule (20) Positionsinformationen empfängt, die Koordinationsstelle (11) ihrerseits Informationen bezüglich derjenigen Rechnermodule (20) aussendet, über welche die Koordinationsstelle (11) mittels der Funkverbindung (36) erreicht werden kann.

12. Verfahren nach Anspruch 11, **dadurch gekennzeichnet, dass** diejenigen Rechnermodule (20), über welche die Koordinationsstelle (11) erreicht werden kann, die von der Koordinationsstelle (11) ausgesandten Informationen empfangen und ihrerseits aussenden, so dass sie von in Reichweite der ausgesandten Informationen befindlichen Rechnermodulen (20) empfangen werden und diese nun ihrerseits Informationen haben, über welche Rechnermodule (20) die Koordinationsstelle (11) erreicht werden kann.

13. Verfahren nach Anspruch 12, **dadurch gekennzeichnet, dass** das Empfangen und Aussenden von Informationen, über welche Rechnermodule (20) die Koordinationsstelle (11) erreicht werden kann, so lange wiederholt wird, bis alle Rechnermodule (20) des Ensembles von Rechnermodulen (20) Informationen darüber haben, über welche Rechnermodule (20) die Koordinationsstelle (11) erreicht werden kann.

14. Rechnermodul (20) umfassend einen Mikroprozessor (21), ein Speicherelement (22), ein auf dem Mikroprozessor (21) ablaufendes Betriebssystem, und eine Kommunikationsschnittstelle (23) zur Kommunikation mit Teilnehmern (12), wobei
- das Rechnermodul (20) Teil eines Ensembles mehrerer Rechnermodule (20) ist, die zur zufälligen und räumlich verteilten Anordnung in einem Einsatzgebiet von Sicherheits- oder Hilfskräften ausgebildet sind, **dadurch gekennzeichnet, dass**
- das Rechnermodul (20) Mittel (33) aufweist, um Signale (25) auszusenden, die eine Ortung des Rechnermoduls (20) in dem Einsatzgebiet durch einen Teilnehmer (12) ermöglichen,
- das Rechnermodul (20) Mittel (31) aufweist, um eine Authentifizierung (26) eines in unmittelbarer Nähe zu dem Rechnermodul (20) befindlichen Teilnehmers (12) durchzuführen,
- das Rechnermodul (20) über die Kommunikationsschnittstelle (23) nach erfolgreicher Authentifizierung (26) eines Teilnehmers (12) mit diesem Informationen austauscht,
- in dem Speicherelement (22) Informationen (24) abgespeichert sind, die zumindest Informationen bezüglich Geographie und/oder Infrastruktur in dem Einsatzgebiet umfassen,
- die Kommunikationsschnittstelle (23) ausgebildet ist, zumindest einen Teil der in dem Speicherelement (22) abgespeicherten Informationen (24) an den authentifizierten Teilnehmer (12) zu übertragen,
- das Rechnermodul (20) eine auf eine voraussichtliche Dauer des Einsatzes der Sicherheits- oder Hilfskräfte in dem Einsatzgebiet beschränkte Lebensdauer aufweist, und
- das Rechnermodul (20) ausgebildet ist, nach Ablauf seiner Lebensdauer inaktiv zu werden und keine Signale (25) mehr auszusenden, die eine Ortung des Rechnermoduls in dem Einsatzgebiet ermöglichen, keine Authentifizierung (26) und/oder keinen Informationsaustausch (27) mit authentifizierten Teilnehmern (12) mehr durchzuführen.

15. Rechnermodul (20) nach Anspruch 14, **dadurch gekennzeichnet, dass** das Rechnermodul (20) Mittel zur Ausführung eines Verfahrens nach einem der Ansprüche 3 bis 13 aufweist.

16. Rechnermodul (20) nach Anspruch 14 oder 15, **dadurch gekennzeichnet, dass** das Rechnermodul (20) Mittel (35) aufweist, um mit benachbarten Rechnermodulen (20) des Ensembles von Rechnermodulen (20) Informationen bezüglich der Position der jeweiligen Rechnermodule (20) auszutauschen, so dass letzten Endes jedes der Rechnermodule (20) Informationen über die Positionen der jeweils benachbarten Rechnermodule (20) hat.

17. Rechnermodul (20) nach einem der Ansprüche 14 bis 16, **dadurch gekennzeichnet, dass** das Rechnermodul (20) Funk-Kommunikationsmittel (35) zum Informationsaustausch mit benachbarten Rechnermodulen (20) des Ensembles von Rechnermodulen (20) über eine Funkverbindung aufweist, um mit den benachbarten Rechnermodulen (20) Informationen bezüglich der Erreichbarkeit einer Koordinationsstelle (11) auszutauschen, die den Einsatz der Sicherheits- oder Hilfskräfte in dem Einsatzgebiet koordiniert, so dass letzten Endes jedes der Rechnermodule (20) Informationen darüber hat, über welche der Rechnermodule (20) die Koordinationsstelle (11) über Funkverbindungen erreicht werden kann.

18. Rechnermodul (20) nach einem der Ansprüche 14 bis 17, **dadurch gekennzeichnet, dass** die Kommunikationsschnittstelle (23) ausgebildet ist, Informationen von dem authentifizierten Teilnehmer (12) zu empfangen.

19. Rechnermodul (20) nach einem der Ansprüche 14 bis 18, **dadurch gekennzeichnet, dass** die Kommunikationsschnittstelle (23) ausgebildet ist, einen kontaktlosen Datenaustausch mit dem authentifizierten Teilnehmer (12), insbesondere mittels Funktechnik, mit geringer Reichweite zu realisieren.

20. Rechnermodul (20) nach Anspruch 19, **dadurch gekennzeichnet, dass** die Kommunikationsschnittstelle (23) ausgebildet ist, einen Informationsaustausch mittels Funktechnik nach einem NFC (Near Field Communication), nach einem RFID (Radio Frequency Identification), nach einem BlueTooth, insbesondere nach einem BlueTooth Low Energy, oder nach einem UHR-C (Ultra High Rate Cordless) Standard zu realisieren.

21. Rechnermodul (20) nach einem der Ansprüche 14 bis 20, **dadurch gekennzeichnet, dass** elektrische und/oder elektronische Bauelement (21, 22, 23, 30, 31, 33, 34, 35) und/oder Baugruppen des Rechnermoduls (20) vollständig vergossen sind.

22. Rechnermodul (20) nach einem der Ansprüche 14 bis 21, **dadurch gekennzeichnet, dass** das Rechnermodul (20) eine Schutzeinrichtung aufweist, welche einen unberechtigten Zugriff auf die in dem Speicherelement (22) des Rechnermoduls (20) gespeicherten Informationen (24) verhindert.

23. Rechnermodul (20) nach Anspruch 21 und 22, **dadurch gekennzeichnet, dass** die Schutzeinrichtung in eine Vergussmasse (29) eingegossene Drähte (32) umfasst, die bei einem gewaltsamen Zugriff auf das in der Vergussmasse (29) vergossene Speicherelement (22) des Rechnermoduls (20) durchtrennt werden und ein automatisches Löschen des Speicherelements (22) veranlassen.

24. Rechnermodul (20) nach einem der Ansprüche 14 bis 23, **dadurch gekennzeichnet, dass** das Rechnermodul (20) Mittel (37, 38, 39) zum selbstständigen Bewegen in dem Einsatzgebiet aufweist.

25. Rechnermodul (20) nach Anspruch 24, **dadurch gekennzeichnet, dass** das Rechnermodul (20) Mittel zur Ermittlung einer Intensität von Sonnenstrahlung aufweist und die Mittel (37, 38, 39) zum selbstständigen Bewegen derart ansteuert, dass sich das Rechnermodul (20) selbstständig in einen Schatten bewegt.

26. Ensemble mehrerer Rechnermodule (20), jeweils umfassend einen Mikroprozessor (21), ein Speicherelement (22), ein auf dem Mikroprozessor (21) ablaufendes Betriebssystem, und eine Kommunikationsschnittstelle (23) zur Kommunikation mit Teilnehmern (12), **dadurch gekennzeichnet, dass** die Rechnermodule (20) nach einem der Ansprüche 14 bis 25 ausgebildet sind.

## Claims

1. Method for realising a transmission of information (27) from a coordination centre (11) which coordinates a deployment of security forces or auxiliary services within an area of operations to a participant (12) present, as part of the security forces or auxiliary services, within the area of operations, wherein
- the information (24) which is to be transmitted comprises at least information regarding the geography and/or infrastructure within the area of operations,
- an ensemble of several computer modules (20) is provided, each comprising a microprocessor (21), a storage element (22) and a communication interface (23) for communication with participants (12) present within the area of operations,
**characterised in that**
- the information (24) intended for transmission to the participants (12) is stored in the storage elements (22) of the computer modules (20),
- following storage of the information (24) in the storage elements (22) of the computer modules (20), these are arranged, distributed randomly and spatially, within the area of operations,
- signals (25) are transmitted from the computer modules (20) arranged within the area of operations which allow the participant (12) to locate the computer modules (20),
- an authentication (26) of the participant (12) present in the vicinity of the located computer module (20) is carried out by at least one computer module (20) located by the participant (12),
- following successful authentication (26) of the participant (12), at least a part of the information (24) stored in the storage element (22) of the located computer module (20) is transmitted (27), at least by the located computer module (20), via the communication interface (23), to the authenticated participant (12) present in the vicinity of the located computer module (20), and
- following expiry of a service life limited to the anticipated duration of the deployment of the security forces or auxiliary services within the area of operations, the computer modules (20) of the ensemble become inactive and no longer transmit signals (25) which would allow location of the computer modules (20) within the area of operations, and no longer carry out authentication of (26) and/or transmission of information (27) to authenticated participants (12) present in the vicinity of the located computer module (20).

2. Method according to claim 1, **characterised in that**, in order to achieve a random and spatially distributed arrangement within the area of operations, the computer modules (20) are scattered from an aircraft (41) flying over the area of operations or from a land vehicle (40) driving through the area of operations.

3. Method according to claim 1 or 2, **characterised in that** the signals (25) transmitted by the computer modules (20) contain information regarding their position within the area of operations in order to make it possible for the participants (12) present within the area of operations to locate the computer modules (20) within the area of operations.

4. Method according to claim 3, **characterised in that**, immediately prior to the random and spatially distributed arrangement of the computer modules (20) of the ensemble within the area of operations, the current position information is stored in the storage elements (22) of the computer modules (20).

5. Method according to claim 3, **characterised in that** the computer modules (20) are each equipped with a satellite navigation system (34) and that the position information of a computer module (20) is automatically determined by the satellite navigation system (34) following arrangement within the area of operations.

6. Method according to one of the claims 1 to 5, **characterised in that** the signals (25) transmitted by the computer modules (20) are beacon signals, transmitted at regular time intervals, which allow a bearing to be taken on the computer modules (20) and/or location thereof within the area of operations.

7. Method according to one of the claims 1 to 6, **characterised in that** the transmission of information (27) between a computer module (20) and the authenticated participants (12) present in the vicinity is bidirectional and that information which the computer module (20) has received from the participants (12) is stored in the storage element (22) of the computer module (20).

8. Method according to one of the claims 1 to 7, **characterised in that** the computer modules (20) also exchange information between one another, preferably via a radio link (36).

9. Method according to claim 8, **characterised in that** each of the computer modules (20) transmits (36) information regarding its position within the area of operations which is received by computer modules (20) in the vicinity of the computer module (20) in question which are located within range of the transmitted position information, so that the computer modules (20) each possess information regarding the position of the nearby computer modules (20).

10. Method according to claim 9, **characterised in that** information regarding a position of the coordination centre (11) is stored in the storage elements (22) of the computer modules (20) and information is stored regarding their own position and that, depending on this position information, each of the computer modules (20) selects those computer modules (20) which are located nearby and exchanges information with those which lie on the shortest route from the computer module (20) in question to the coordination centre (11).

11. Method according to claim 10, **characterised in that** if the coordination centre (11) receives position information from one of the computer modules (20), the coordination centre (11) in turn transmits information regarding those computer modules (20) via which the coordination centre (11) can be reached by means of the radio link (36).

12. Method according to claim 11, **characterised in that** those computer modules (20) via which the coordination centre (11) can be reached receive the information transmitted by the coordination centre (11) and transmit this in turn, so that this is received by computer modules (20) located within range of the transmitted information, and these now in turn possess information regarding those computer modules (20) via which the coordination centre (11) can be reached.

13. Method according to claim 12, **characterised in that** the reception and transmission of information regarding those computer modules (20) via which the coordination centre (11) can be reached is repeated until all computer modules (20) of the ensemble of computer modules (20) possess information regarding those computer modules (20) via which the coordination centre (11) can be reached.

14. Computer module (20) comprising a microprocessor (21), a storage element (22), an operating system running on the microprocessor (21) and a communication interface (23) for communication with participants (12), wherein
- the computer module (20) is part of an ensemble of several computer modules (20) designed for random and spatially distributed arrangement within an area of operation of security forces or auxiliary services, **characterised in that**
- the computer module (20) possesses means (33) for transmitting signals (25) which allow the participant (12) to locate the computer module (20) within the area of operations,
- the computer module (20) possesses means (31) for carrying out an authentication (26) of a participant (12) present in the immediate vicinity of the computer module (20),
- following successful authentication (26) of a participant (12), the computer module (20) exchanges information with said participant via the communication interface (23),
- information (24) is stored in the storage element (22) which comprises at least information regarding geography and/or infrastructure in the area of operations,
- the communication interface (23) is designed to transmit at least a part of the information (24) stored in the storage element (22) to the authenticated participants (12),
- the computer module (20) has a service life limited to the anticipated duration of the deployment of the security forces or auxiliary services within the area of operations, and
- the computer module (20) is designed, following expiry of its service life, to become inactive and no longer transmit signals (25) which would allow location of the computer modules within the area of operations, and no longer carry out authentication of (26) and/or transmission of information (27) to authenticated participants (12).

15. Computer module (20) according to claim 14, **characterised in that** the computer module (20) possesses means for carrying out a method according to one of the claims 3 to 13.

16. Computer module (20) according to claim 14 or 15, **characterised in that** the computer module (20) possesses means (35) of exchanging information regarding the position of the respective computer modules (20) with nearby computer modules (20) of the ensemble of computer modules (20), so that ultimately each of the computer modules (20) possesses information regarding the positions of the nearby computer modules (20).

17. Computer module (20) according to one of the claims 14 to 16, **characterised in that** the computer module (20) possesses radio communication means (35) allowing the exchange of information with nearby computer modules (20) of the ensemble of computer modules (20), via a radio link, with the nearby computer modules (20) regarding the accessibility of a coordination centre (11) which coordinates the deployment of the security forces or auxiliary services within the area of operations, so that ultimately each of the computer modules (20) possesses information as to which of the computer modules (20) can reach the coordination centre (11) via radio links.

18. Computer module (20) according to one of the claims 14 to 17, **characterised in that** the communication interface (23) is designed to receive information from the authenticated participants (12).

19. Computer module (20) according to one of the claims 14 to 18, **characterised in that** the communication interface (23) is designed to realise a short-range contact-free exchange of data with the authenticated participants (12), in particular by means of radio technology.

20. Computer module (20) according to claim 19, **characterised in that** the communication interface (23) is designed to realise an exchange of information by means of radio technology based on an NFC (Near Field Communication), RFID (Radio Frequency Identification), BlueTooth, in particular BlueTooth Low Energy, or UHR-C (Ultra High Rate Cordless) standard.

21. Computer module (20) according to one of the claims 14 to 20, **characterised in that** electrical and/or electronic components (21, 22, 23, 30, 31, 33, 34, 35) and/or assemblies of the computer module (20) are completely potted.

22. Computer module (20) according to one of the claims 14 to 21, **characterised in that** the computer module (20) has a protective device which prevents unauthorised access to the information (24) stored in the storage element (22) of the computer module (20).

23. Computer module (20) according to claim 21 and 22, **characterised in that** the protective device comprises wires (32) cast into a casting compound (29) which in the event of any violent attempt to access the storage element (22) of the computer module (20) cast in the casting compound (29) cause an automatic erasure of the storage element (22).

24. Computer module (20) according to one of the claims 14 to 23, **characterised in that** the computer module (20) possesses means (37, 38, 39) of independent movement within the area of operations.

25. Computer module (20) according to claim 24, **characterised in that** the computer module (20) possesses means for determining an intensity of solar radiation and controls the means (37, 38, 39) of independent movement such that the computer module (20) moves independently into the shade.

26. Ensemble of several computer modules (20), each comprising a microprocessor (21), a storage element (22), an operating system running on the microprocessor (21) and a communication interface (23) for communication with participants (12), **characterised in that** the computer modules (20) are designed according to one of the claims 14 to 25.

## Revendications

1. Procédé de réalisation d'une transmission d'informations (27) entre un poste de coordination (11) qui effectue la coordination de l'intervention de forces de sécurité ou de forces auxiliaires dans une zone d'intervention et un participant (12) faisant partie des forces de sécurité ou des forces auxiliaires se trouvant dans la zone d'intervention, procédé selon lequel
- les informations (24) à transmettre comprennent au moins des informations concernant la géographie et/ou l'infrastructure de la zone d'intervention,
- il est prévu un ensemble de plusieurs modules d'ordinateur (20) qui comprennent chacun un microprocesseur (21), un élément de mémoire (22) et une interface de communication (23) pour permettre la communication avec des participants (12) se trouvant dans la zone d'intervention,
**caractérisé en ce que**
- dans les éléments de mémoire (22) des modules d'ordinateur (20) sont enregistrées les informations (24) définies pour permettre la transmission aux participants (12),
- après l'enregistrement des informations (24) dans les éléments de mémoire (22) des modules d'ordinateur (20) ces modules sont répartis au hasard et localement dans la zone d'intervention,
- les modules d'ordinateur (20) situés dans la zone d'intervention émettent des signaux (25) permettant une localisation des modules d'ordinateur (20) par les participants (12),
- au moins un module d'ordinateur (20) localisé par les participants (12) effectue une authentification (26) du participant (12) se trouvant à proximité du module d'ordinateur (20) localisé,
- au moins le module d'ordinateur (20) localisé transmet (27) par l'intermédiaire de l'interface d'utilisation (23) au moins une partie des informations (24) enregistrées dans l'élément de mémoire (22) du module d'ordinateur (20) localisé au participant (12) authentifié se trouvant à proximité du module d'ordinateur (20), localisé après authentification (26) fructueuse de ce participant (12), et
- après écoulement d'une durée de vie limitée à la durée prévisible de l'intervention des forces de sécurité ou des forces auxiliaires dans la zone d'utilisation, les modules d'ordinateur (20) de l'ensemble deviennent inactifs et n'envoient plus de signaux (25) permettant une localisation du module d'ordinateur (20) dans la zone d'intervention, et n'effectuent plus d'authentification (26) et/ou de transmission d'information (27) au participant (12) authentifié se trouvant à proximité.

2. Procédé conforme à la revendication 1, **caractérisé en ce que** pour permettre leur répartition au hasard et localement dans la zone d'intervention, les modules d'ordinateur (20) sont dispersés à partir d'un avion (41) volant dans la zone d'intervention ou d'un véhicule (40) se déplaçant au travers de la zone d'intervention.

3. Procédé conforme à l'une des revendications 1 et 2, **caractérisé en ce que** les signaux (25) émis par les modules d'ordinateur (20) renferment des informations concernant leur position dans la zone d'intervention pour permettre une localisation des modules d'ordinateur (20) situés dans la zone d'intervention par les participants (12) se trouvant dans cette zone d'intervention.

4. Procédé conforme à la revendication 3, **caractérisé en ce que** immédiatement avant la répartition au hasard et localement des modules d'ordinateur (20) de l'ensemble dans la zone d'intervention, les informations de position actuelles sont enregistrées dans les éléments de mémoire (22) des modules d'ordinateur (20).

5. Procédé conforme à la revendication 3, **caractérisé en ce que** les modules d'ordinateur (20) comportent chacun un système de navigation par satellite (34), et les informations de position d'un module d'ordinateur (20) sont déterminées automatiquement par le système de navigation par satellite (34) après son installation dans la zone d'intervention.

6. Procédé conforme à l'une des revendications 1 à 5, **caractérisé en ce que** les signaux (25) émis par les modules d'ordinateur (20) sont des signaux d'alarme lumineux émis à intervalles réguliers qui permettent un repérage et/ou une localisation des modules d'ordinateur (20) dans la zone d'intervention.

7. Procédé conforme à l'une des revendications 1 à 6, **caractérisé en ce que** la transmission d'informations (27) entre un module d'ordinateur (20) et le participant authentifié (12) se trouvant à proximité est bidirectionnelle et des informations que le module d'ordinateur (20) a reçues du participant (12) sont enregistrées dans l'élément de mémoire (22) du module d'ordinateur (20).

8. Procédé conforme à l'une des revendications 1 à 7, **caractérisé en ce que** les modules d'ordinateur (20) échangent également des informations entre eux, de préférence par l'intermédiaire d'une liaison radio (36).

9. Procédé conforme à la revendication 8, **caractérisé en ce que** chaque module d'ordinateur (20) émet (36) des informations concernant sa position dans la zone d'intervention qui sont reçues par les modules d'ordinateur (20) voisins de ce module d'ordinateur (20) se trouvant dans le rayon d'action des informations de position émises de sorte que chacun des modules d'ordinateur (20) dispose d'informations concernant la position des modules d'ordinateur (20) voisins.

10. Procédé conforme à la revendication 9, **caractérisé en ce que** dans les éléments de mémoire (22) des modules d'ordinateur (20) sont enregistrées des informations concernant la position du poste de coordination (11) et il y a des informations concernant leur propre position, et en fonction de ces informations de position, chacun des modules d'ordinateur (20) choisit les modules d'ordinateur (20) voisins qui se trouvent sur le plus court chemin entre le module d'ordinateur (20) et le poste de coordination (11) et échange des informations avec ces modules.

11. Procédé conforme à la revendication 10, **caractérisé en ce que** lorsque le poste de coordination (11) reçoit des informations de position de l'un des modules d'ordinateur (20), ce poste de coordination (11) émet de son côté des informations concernant les modules d'ordinateur (20) par l'intermédiaire desquels il peut être atteint par la liaison radio (36).

12. Procédé conforme à la revendication 11, **caractérisé en ce que** les modules d'ordinateur (20) par l'intermédiaire desquels le poste de coordination (11) peut être atteint reçoivent les informations émises par le poste de communication (11) et les émettent de leur côté de sorte qu'elles soient reçues par des modules d'ordinateur (20) situés dans le rayon d'action des informations émises, et que ceux-ci disposent de leur côté d'informations concernant les modules d'ordinateur (20) par l'intermédiaire desquels le poste de coordination (11) peut être atteint.

13. Procédé conforme à la revendication 12, **caractérisé en ce que** la réception et l'émission d'informations concernant les modules d'ordinateur (20) par l'intermédiaire desquels le poste de coordination (11) peut être atteint soit répétée jusqu'à ce que tous les modules d'ordinateur (20) de l'ensemble de modules d'ordinateur (20) disposent des informations concernant les modules d'ordinateur (20) par l'intermédiaire desquels le poste de coordination (11) peut être atteint.

14. Module d'ordinateur (20) comprenant un microprocesseur (21), un élément de mémoire (22), un système de fonctionnement s'exécutant sur le microprocesseur (21) et une interface de communication (23) permettant la communication avec des participants (12), dans lequel :
- le module d'ordinateur (20) fait partie d'un ensemble de plusieurs modules d'ordinateur (20) qui sont réalisés pour pouvoir être répartis au hasard et localement dans une zone d'intervention de forces de sécurité et de forces auxiliaire,
**caractérisé en ce que**
- le module d'ordinateur (20) comporte des moyens (33) permettant d'émettre des signaux (25) qui permettent une localisation du module d'ordinateur (20) dans la zone d'intervention par un participant (12),
- le module d'ordinateur (20) comprend des moyens (31) permettant d'authentifier (26) un participant (12) se trouvant à proximité immédiate de ce module d'ordinateur (20),
- le module d'ordinateur (20) échange des informations avec un participant (12) par l'intermédiaire de l'interface de communication (23) après authentification (26) fructueuse de celui-ci,
- dans l'élément de mémoire (22) sont enregistrées des informations (24) qui concernent au moins des informations concernant la géographie et/ou l'infrastructure de la zone d'intervention,
- l'interface de communication (23) est réalisée pour permettre de transmettre au moins une partie des informations (24) enregistrées dans l'élément de mémoire (22) au participant (12) authentifié,
- le module d'ordinateur (20) a une durée de vie limitée à la durée prévisible de l'intervention des forces de sécurité ou des forces auxiliaires dans la zone d'intervention, et
- le module d'ordinateur (20) est réalisé pour devenir inactif après écoulement de sa durée de vie et ne plus émettre de signaux (25) permettant sa localisation dans la zone d'intervention, et ne plus effectuer d'authentification (26) et/ou d'échange d'information (27) avec des participants (12) authentifiés.

15. Module d'ordinateur (20) conforme à la revendication 14, **caractérisé en ce qu'**il comporte des moyens permettant la mise en oeuvre du procédé conforme à l'une des revendications 3 à 13.

16. Module d'ordinateur (20) conforme à la revendication 14 ou 15, **caractérisé en ce qu'**il comporte des moyens (35) permettant d'échanger avec des modules d'ordinateur (20) voisins de l'ensemble de modules d'ordinateur (20) des informations concernant la position de ces modules d'ordinateur (20) de sorte, qu'à la fin, chacun des modules d'ordinateur (20) dispose d'informations concernant les positions des modules d'ordinateur (20) voisins respectifs.

17. Module d'ordinateur (20) conforme à l'une des revendications 14 à 16, **caractérisé en ce qu'**il comprend des moyens de communication radio (35) pour permettre un échange d'informations avec des modules d'ordinateur (20) voisins de l'ensemble de modules d'ordinateur (20) par l'intermédiaire d'une liaison radio, pour permettre d'échanger avec les modules d'ordinateur (20) voisins des informations concernant la possibilité d'atteindre un poste de coordination (11) qui coordonne l'intervention des forces de sécurité ou des forces auxiliaires dans la zone d'intervention, de sorte qu'à la fin, chacun des modules d'ordinateur (20) dispose d'informations concernant les modules d'ordinateur (20) par l'intermédiaire desquels le poste de coordination (11) peut être atteint par des liaisons radio.

18. Module d'ordinateur (20) conforme à l'une des revendications 14 à 17, **caractérisé en ce que** l'interface de communication (23) est réalisée pour permettre de recevoir des informations provenant du participant (12) authentifié.

19. Module d'ordinateur (20) conforme à l'une des revendications 14 à 18, **caractérisé en ce que** l'interface de communication (23) est réalisée pour permettre d'effectuer un échange de données sans contact avec le participant (12) authentifié, en particulier par la technique radio avec un faible rayon d'action.

20. Module d'ordinateur (20) conforme à la revendication 19, **caractérisé en ce que** l'interface de communication (23) est réalisée pour permettre un échange d'informations par la technique radio selon le standard NFC (Near Field Communication), le standard RFID (Radio Frequency Identification), le standard Blue Tooth, en particulier le standard Blue Tooth Low Energy ou selon le standard UHR-C (Ultra High Rate Cordless).

21. Module d'ordinateur (20) conforme à l'une des revendications 14 à 20, **caractérisé en ce que** des composants (21, 22, 23, 30, 31, 33, 34, 35) et/ou des groupes de composants électriques et/ou électroniques du module d'ordinateur (20) sont totalement scellés.

22. Module d'ordinateur (20) conforme à l'une des revendications 14 à 21, **caractérisé en ce qu'**il comporte un dispositif de protection qui empêche un accès non-autorisé aux informations (24) enregistrées dans l'élément de mémoire (22) du module d'ordinateur (20).

23. Module d'ordinateur (20) conforme à la revendication 21 ou 22, **caractérisé en ce que** le dispositif de protection comporte des fils (32) noyés dans une masse de scellement (29) qui, en cas d'accès à force à l'élément de mémoire (22) du module d'ordinateur (20) scellé dans la masse de scellement (29) sont sectionnés et provoquent un effacement automatique de l'élément de mémoire (22).

24. Module d'ordinateur (20) conforme à l'une des revendications 14 à 23, **caractérisé en ce qu'**il comporte des moyens (37, 38, 39) permettant de se déplacer de manière autonome dans la zone d'intervention.

25. Module d'ordinateur (20), conforme à la revendication 24, **caractérisé en ce qu'**il comprend des moyens permettant de déterminer l'intensité du rayonnement solaire, et les moyens (37, 38, 39) de déplacement autonome sont commandés de façon que le module d'ordinateur (20) se déplace de manière autonome dans une ombre.

26. Ensemble constitué par plusieurs modules d'ordinateur (20) comprenant chacun un microprocesseur (21), un élément de mémoire (22), un système de fonctionnement s'exécutant sur le microprocesseur (21) et une interface de communication (23) permettant la communication avec des participants (12), **caractérisé en ce que** les modules d'ordinateur (20) sont réalisés conformément à l'une des revendications 14 à 25.
